(19) Europäisches Patentamt
European Patent Office
Office européen des brevets

(11) **EP 3 722 630 B1**

(12) **EUROPEAN PATENT SPECIFICATION**

(45) Date of publication and mention
of the grant of the patent:
**06.04.2022   Bulletin 2022/14**

(21) Application number: **18887070.3**

(22) Date of filing: **06.12.2018**

(51) International Patent Classification (IPC):
**F16C 29/06** *(2006.01)*      **F16C 33/76** *(2006.01)*
**F16C 29/08** *(2006.01)*

(52) Cooperative Patent Classification (CPC):
**F16C 29/0666; F16C 29/06; F16C 29/0673;**
**F16C 29/086; F16C 29/088; F16C 33/76**

(86) International application number:
**PCT/JP2018/044992**

(87) International publication number:
**WO 2019/112021 (13.06.2019 Gazette 2019/24)**

(54) **LINEAR MOTION GUIDE DEVICE**

**LINEARBEWEGUNGSFÜHRUNGSVORRICHTUNG**

**DISPOSITIF DE GUIDAGE DE MOUVEMENT LINÉAIRE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2017   JP 2017234351
06.12.2017   JP 2017234350
21.11.2018   JP 2018218340**

(43) Date of publication of application:
**14.10.2020   Bulletin 2020/42**

(73) Proprietor: **NSK Ltd.**
**Tokyo 141-8560 (JP)**

(72) Inventors:
• **NAKAGAWA Takumi**
**Fujisawa-shi**
**Kanagawa 252-0811 (JP)**
• **XU Wei**
**Fujisawa-shi**
**Kanagawa 251-8501 (JP)**
• **MORIYAMA Shun**
**Fujisawa-shi**
**Kanagawa 252-0811 (JP)**
• **KUDO Tetsuya**
**Changwon-shi**
**Gyeongsangnam-do 51575 (KR)**
• **MATSUMOTO Jun**
**Tokyo 141-8560 (JP)**
• **IGARASHI Yutaka**
**Sendai-shi**
**Miyagi 980-0811 (JP)**
• **NAKANO Kenta**
**Fujisawa-shi**
**Kanagawa 252-0811 (JP)**
• **WADA Atsushi**
**Tokyo 141-8560 (JP)**

(74) Representative: **Grünecker Patent- und
Rechtsanwälte
PartG mbB
Leopoldstraße 4
80802 München (DE)**

(56) References cited:
**WO-A1-2016/152123      JP-A- H05 164 128
JP-A- 2005 114 034      JP-A- 2005 291 341
JP-U- H0 637 622      JP-U- H04 124 328
JP-U- H04 124 328**

## EP 3 722 630 B1

**Description**

Technical Field

The present invention relates to a linear motion guide device. More particularly, the present invention relates to a linear motion guide device used in a machine tool, an automobile manufacturing equipment, a transporting device, and the like.

Background Art

In the related art, a linear motion guide device used in a machine tool or the like generally includes a guide rail having rail-side track surfaces on left and right sides thereof, a slider having, on inner sides thereof, slider-side track surfaces facing the respective rail-side track surfaces of the guide rail, and a plurality of rolling elements capable of rolling in a linear rolling element rolling path formed between two track surfaces of the guide rail and the slider. Further, when the rolling elements roll in the rolling element rolling path, the slider moves relative to the guide rail along an axial direction thereof. The rolling elements rolling in the rolling element rolling path change direction in an end cap attached to both end portions in the axial direction of the slider, and thereafter return to an initial position through a rolling element return path formed in the slider.

In addition, when foreign matter such as dust enters the rolling element rolling path from a gap between a side surface of the guide rail and an inner side surface of the slider in the linear motion guide device, rolling motion of the rolling elements is impaired and running performance of the slider is greatly lowered. In response, a linear motion guide device provided with a seal that prevents a foreign matter such as dust from entering the rolling element rolling path from the gap between the side surface of the guide rail and the inner side surface of the slider has been proposed (see, for example, Patent Literatures 1 to 6). In a linear motion guide device disclosed in Patent Literature 1, a seal member includes a lip member protruding toward a guide rail side, and a holding member that fixes the lip member, and is attached to a slider by a screw inserted into the holding member.

In a guide device disclosed in Patent Literature 2, a foreign matter entry prevention plate is formed by inserting one side-edge end portion of a foreign matter entry prevention plate body into a concave groove of a foreign matter entry prevention plate accommodating case and bonding the side-edge end portion with an adhesive. Further, the foreign matter entry prevention plate is attached to a moving block body by inserting a screw into an oblong screw hole of the foreign matter entry prevention plate accommodating case and pushing the screw toward a track rail side.

Further, in a ball slide way disclosed in Patent Literature 3, a bottom seal is formed by attaching synthetic rubber to an iron plate and is fastened and fixed by a bolt, and an iron plate portion thereof abuts on a lower end surface, which is provided with a step, of a lower guide portion.

Further, a contact seal that protects a slider such as a side seal, an inner seal, and an under seal is used for the linear motion guide device, and there are many proposals for a lip shape thereof (see, for example, Patent Literatures 7 to 10). With respect to shapes disclosed in Patent Literatures 7 and 8, a plurality of lips are formed on a contact surface of one seal. Generally, it is known that prevention with a plurality of lips is more excellent than prevention with one lip when a foreign matter enters from the outside, and a plurality of seals are often used in an overlapping manner. In Patent Literatures 7 and 8, even in a case of one seal, a plurality of lips are provided, and an effect similar to that of a case where a plurality of seals are overlapped is expected. Further, in Patent Literature 9, constant seal efficiency is secured regardless of a sliding direction by arranging lips symmetrically with respect to a core metal.

Citation List

Patent Literature

Patent Literature 1: WO2016/152123 (FIG. 9)
Patent Literature 2: JP-A-2005-114034 (FIGS. 9 and 10)
Patent Literature 3: JP-A-S63-77622
Patent Literature 4: JP-A-2014-219025
Patent Literature 5: JP-A-2005-291341
Patent Literature 6: JP-A-H7-12626
Patent Literature 7: JP-A-2010-84811
Patent Literature 8: JP-A-11-287245
Patent Literature 9: JP-A-2002-266858

Patent Literature 10: JP-A-2014-163482

Summary of Invention

Technical Problem

However, with respect to the linear motion guide device disclosed in Patent Literature 1, there is no specific description of fixing the lip member to the holding member. For this reason, for example, when the lip member is fixed to the holding member with a screw with the lip member sandwiched therebetween, a restraining force is weak, and there is a concern about positional displacement of the lip member.

In addition, with respect to the guide device disclosed in Patent Literature 2, the foreign matter entry prevention plate body is bonded to the foreign matter entry prevention plate accommodating case with an adhesive, but the manufacturing is complicated, and there is concern about increase in cost.

Further, with respect to the ball slide way disclosed in Patent Literature 3, the manufacturing is complicated since the synthetic rubber is attached to the iron plate portion, and there is a problem in seal efficiency since the iron plate portion abuts on the lower end surface, which is provided with a step, of the lower guide portion.

In addition, with respect to seal shapes thereof, the seal efficiency is improved, and a seal friction force tends to increase. As disclosed in Patent Literatures 7 and 9, when n lips of a same shape are brought into contact with each other, seal friction is n times. As disclosed in Patent Literature 8, even if the lip shapes are changed, the seal friction force basically increases. Since the lips are disposed side by side, a width dimension of all the lips is larger than that of a standard single lip.

For this reason, the seals disclosed in Patent Literatures 7, 8, and 9 have large seal friction and large lip width dimensions, which may cause a problem depending on use conditions, although seal efficiency thereof are improved.

With respect to a seal disclosed in Patent Literature 10, an outermost lip and an inner lip do not come into contact with a counterpart component at the same time and only the outermost lip is in contact with the mating component, and in this case the seal friction force is small. However, when interference is increased and a plurality of lips are brought into contact with each other, the seal friction increases and the plurality of lips are in contact with each other, and thus the effect of multiple lips as in Patent Literatures 7 and 9 cannot be expected. Further, since being a laminated seal, the width dimension of the entire seal is increased, and application may be difficult depending on an application position of the seal.

The present invention has been made in view of the above-described problems, and a first object thereof is to provide a linear motion guide device including an under seal which can be assembled at low cost and with high accuracy.

Further, a second object of the present invention is to provide a linear motion guide device that allows to use a contact state properly according to an application and that is capable of improving the seal efficiency with a width dimension equivalent to that of a single lip seal.

Solution to Problem

The object of the present invention is achieved with the following two configurations according to claims 1 and 18.

(1) A linear motion guide device, comprising:

a guide rail that has a guide rail-side track surface extending in an axial direction thereof;
a slider that is mounted so as to straddle the guide rail, has a slider-side track surface facing the guide rail-side track surface, and is disposed so as to move relative to the guide rail in the axial direction;
a plurality of rolling elements that are rotatably disposed in a rolling element rolling path formed between the guide rail-side track surface and the slider-side track surface; and
an under seal that is attached to the slider to seal a gap formed between a side surface of the guide rail and an inner side surface of the slider, wherein
the under seal includes:

a seal member that includes a seal member body, a lip portion and a fitting hole, wherein the seal member body extends in a longitudinal direction of the slider, wherein the lip portion is formed at a tip in a direction of extending from the seal member body toward the guide rail and has a main lip in contact with the guide rail, and wherein the fitting hole penetrates the seal member body; and
a seal cover that includes a fitting protrusion in which an opening is formed, and that holds the seal member, and

the fitting protrusion is fitted into the fitting hole, and with the fitting protrusion in a state of abutting on a fixing surface of the slider, the under seal is attached to the slider as a fastening member penetrating the opening is fastened to the slider.

(2) A linear motion guide device, comprising:

a guide rail that has a guide rail-side track surface extending in an axial direction thereof;
a slider that is mounted so as to straddle the guide rail, has a slider-side track surface facing the guide rail-side track surface, and is disposed so as to move relative to the guide rail in the axial direction;
a plurality of rolling elements that are rotatably disposed in a rolling element rolling path formed between the guide rail-side track surface and the slider-side track surface; and
an under seal that is attached to the slider to seal a gap formed between a side surface of the guide rail and an inner side surface of the slider, wherein
the under seal includes:

a seal member that includes a seal member body and a lip portion, wherein the seal member body extends in a longitudinal direction of the slider, and wherein the lip portion is formed at a tip in a direction of extending from the seal member body toward the guide rail and has a main lip in contact with the guide rail; and
a seal cover that holds the seal member, and

an auxiliary lip protruding outward is further formed on a surface of the lip portion in contact with the guide rail, the auxiliary lip is formed between a section from the main lip to a connection portion connected to the seal member body.

Advantageous Effects of Invention

According to the configuration (1) of the present invention, the fitting protrusion of the seal cover is fitted into the fitting hole of the seal body, and with the fitting protrusion in a state of abutting on the fixing surface of the slider, the fastening member penetrating the opening is fastened to the slider, so that the under seal can be appropriately positioned. Accordingly, it is possible to provide a linear motion guide device including an under seal which can be assembled at low cost and with high accuracy, and a method (not part of the invention) for assembling the linear motion guide device.
Further, according to the configuration (2) of the present invention, since an auxiliary lip protruding outward is further formed on a surface of the lip portion in contact with the guide rail, the auxiliary lip is formed between a section from the main lip to a connection portion connected to the seal member body, it is possible to properly use the contact state according to the use, and to improve the seal efficiency with a width dimension equivalent to that of the single lip seal.

Brief Description of Drawings

FIG. 1 is a perspective view of a linear motion guide device according to a first embodiment of the present invention.
FIG. 2 is a perspective view of a slider to which an under seal is attached.
FIG. 3 is a perspective view illustrating a state where the under seal is removed from the slider.
FIG. 4 is a cross-sectional view of the linear motion guide device of FIG. 1.
FIG. 5A is a front view of a seal member, FIG. 5B is a side view of the seal member, and FIG. 5C is a cross-sectional view taken along a line V-V in FIG. 5A.
FIG. 6A is a front view of a holding member, FIG. 6B is a side view of the holding member, and FIG. 6C is a cross-sectional view taken along a line VI-VI in FIG. 6A.
FIG. 7A is a cross-sectional view illustrating a state that is before the seal member being assembled to the holding member, and FIG. 7B is a cross-sectional view illustrating a state that is after the seal member being assembled to the holding member.
FIG. 8 is a cross-sectional view taken along a line VIII-VIII of in FIG. 4.
FIG. 9 is a view of the part in FIG. 4 as viewed in a direction indicated by an arrow IX in FIG. 4.
FIG. 10 is a cross-sectional view of the linear motion guide device, which is taken orthogonally to an axis and is different from that of FIG. 4.
FIG. 11 is a view of an under seal according to a first modification of the present embodiment, as viewed from a slider side.
FIG. 12A is a front view of a seal member according to a second modification of the present embodiment, and FIG.

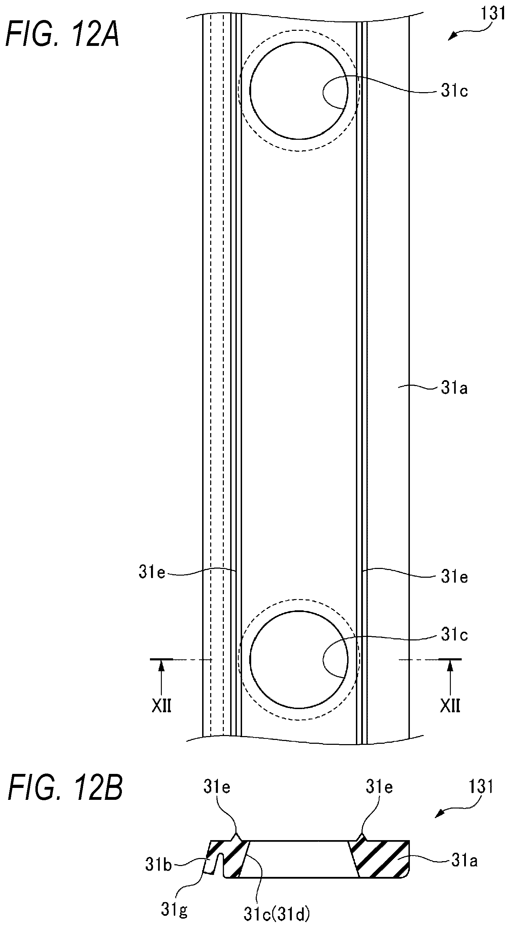

12B is a cross-sectional view taken along a line XII-XII in FIG. 12A.

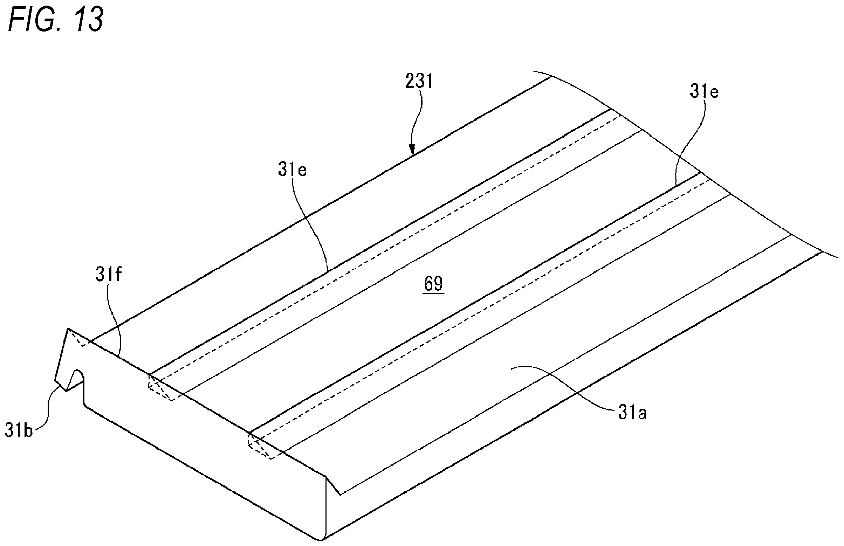

FIG. 13 is a perspective view of a seal member according to a third modification of the present embodiment.

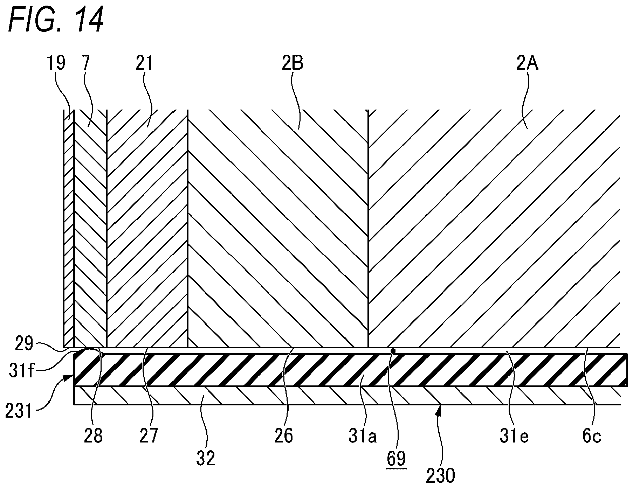

FIG. 14 is a cross-sectional view of a slider to which an under seal according to a third modification is attached.

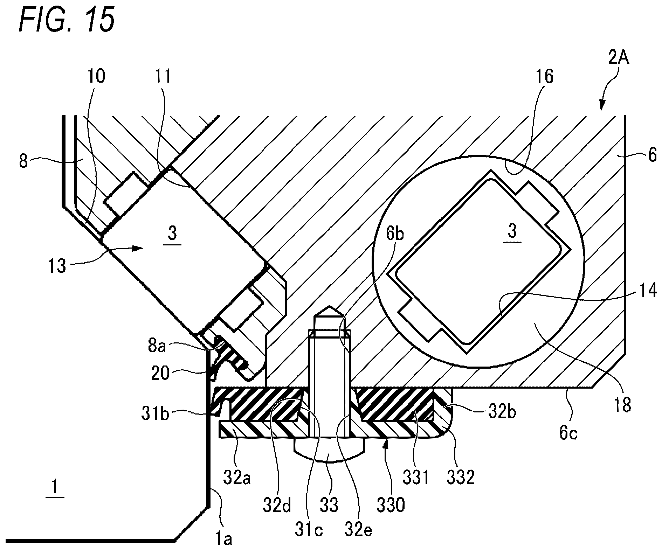

FIG. 15 a cross-sectional view of a guide rail and a slider according to a second embodiment, which is taken along a direction orthogonal to a longitudinal direction of the guide rail.

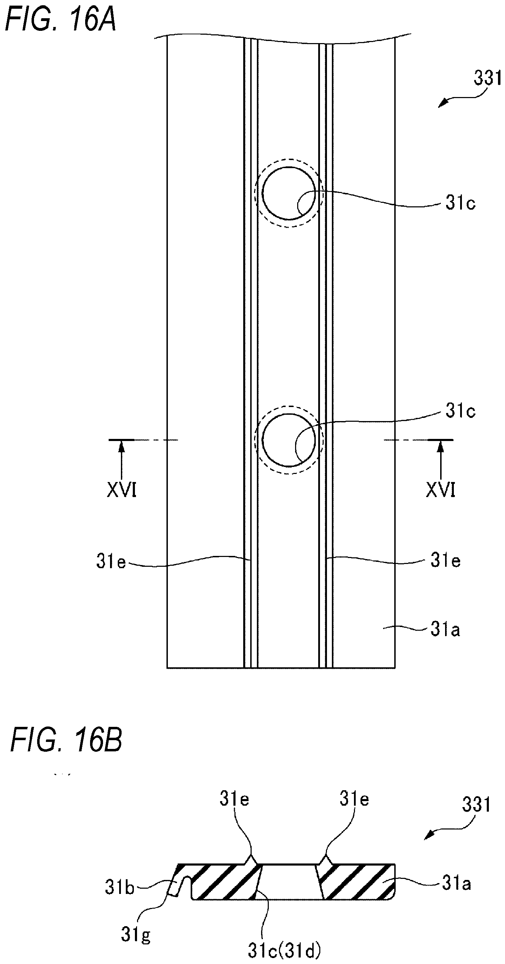

FIG. 16A is a front view of a seal member according to the second embodiment, and FIG. 16B is a cross-sectional view taken along a line XVI-XVI in FIG. 16A.

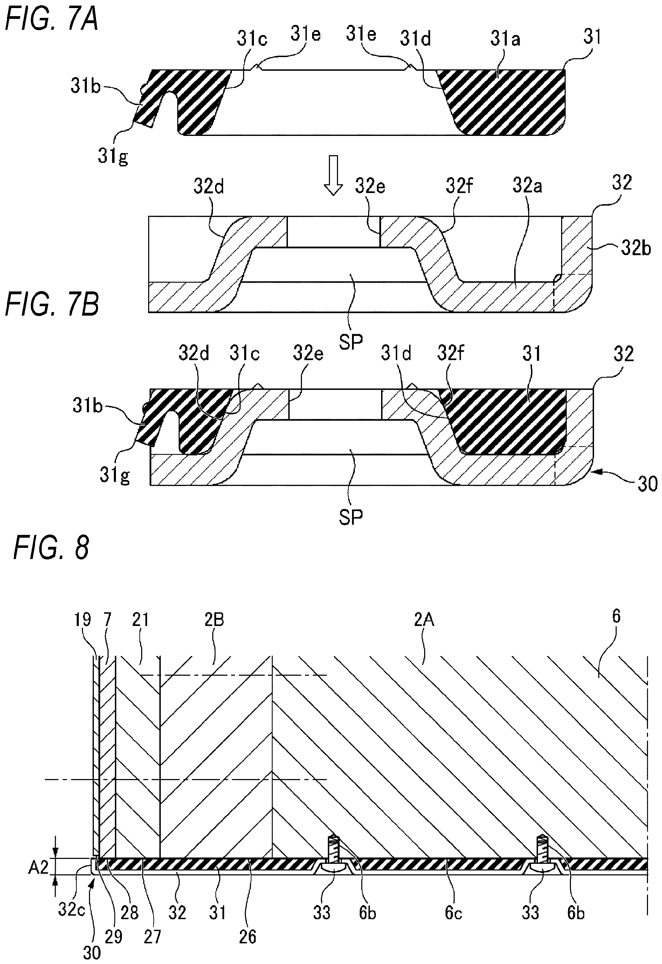

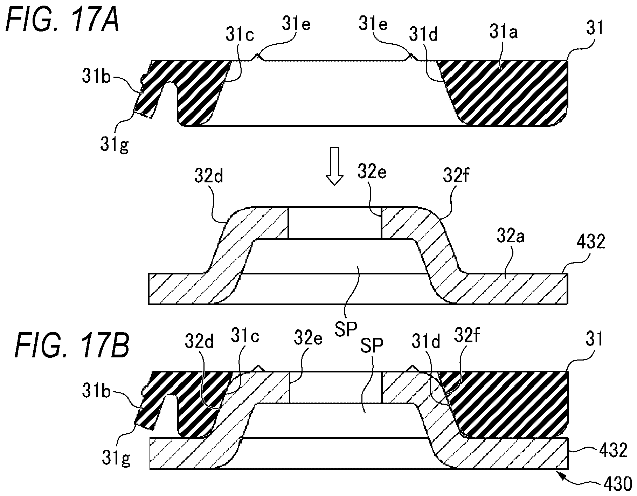

FIG. 17A and FIG. 17B are cross-sectional views of an under seal according to a third embodiment, which are similar to those of FIG. 7.

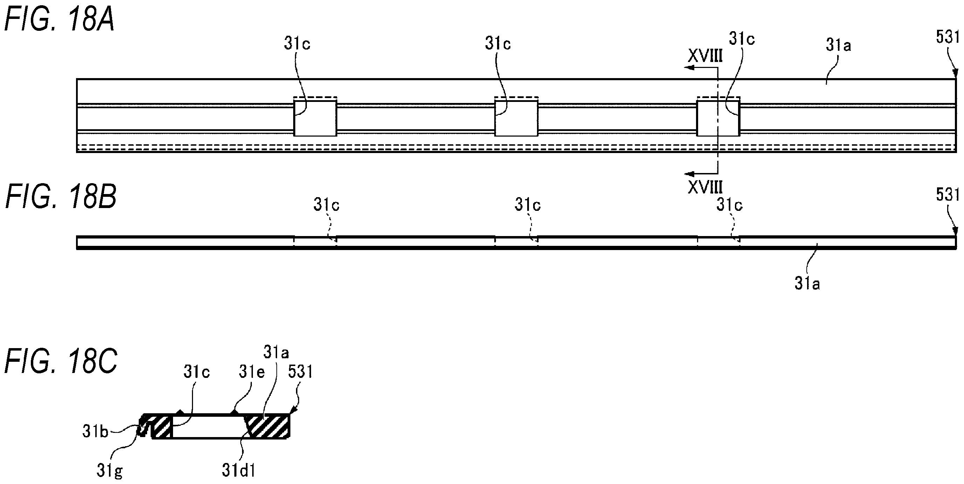

FIG. 18A is a front view of a seal member according to a fourth embodiment, FIG. 18B is a side view of the seal member, and FIG. 18C is a cross-sectional view taken along a line XVIII-XVIII in FIG. 18A.

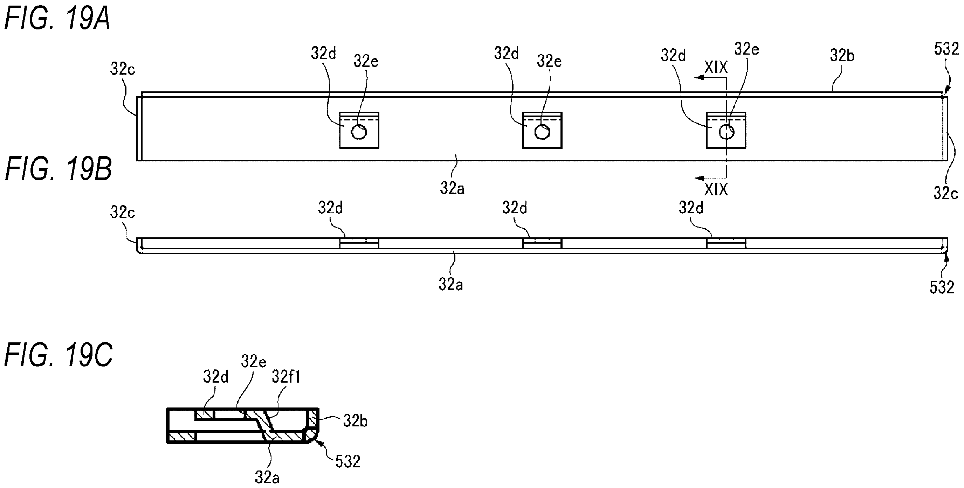

FIG. 19A is a front view of a seal cover according to the fourth embodiment, FIG. 19B is a side view of the seal cover, and FIG. 19C is a cross-sectional view taken along a line XIX-XIX in FIG. 19A.

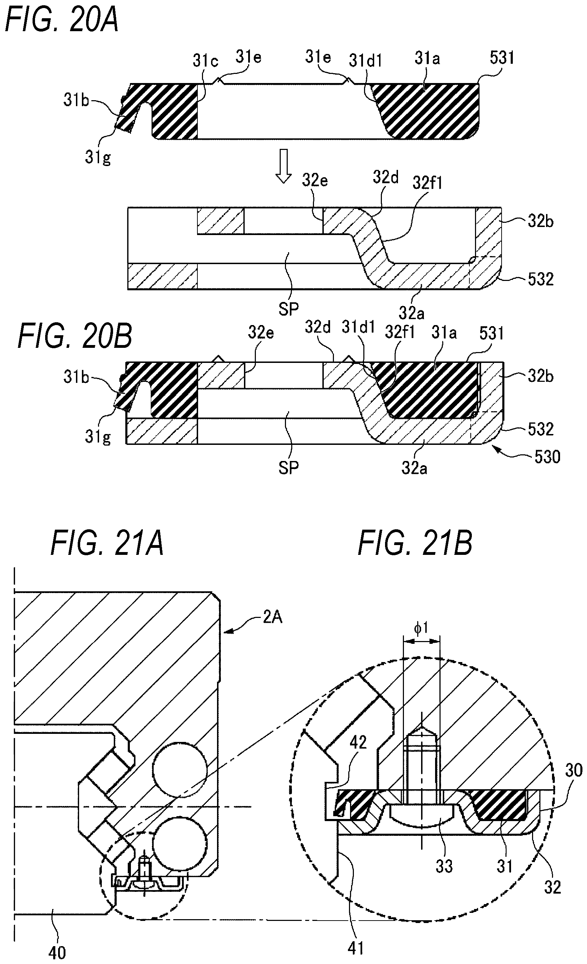

FIG. 20A is a cross-sectional view illustrating a state that is before the seal member being assembled to the seal cover in the fourth embodiment, and FIG. 20B is a cross-sectional view illustrating a state that is after the seal member being assembled to the seal cover.

FIG. 21A is a cross-sectional view illustrating a slider, and a jig that is used when assembling an under seal to the slider, and FIG. 21B is a partial enlarged view thereof.

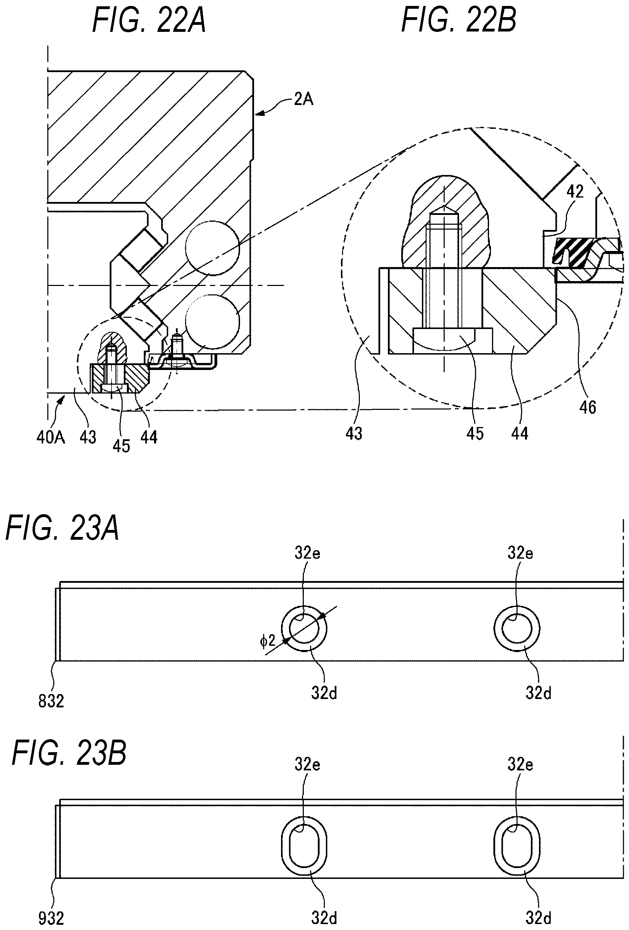

FIG. 22A is a cross-sectional view illustrating a slider and another jig that is used when an under seal according to a modification is assembled to the slider, and FIG. 22B is a partial enlarged view thereof.

FIG. 23A and FIG. 23B are views of the under seal according to the modification as viewed from a slider side.

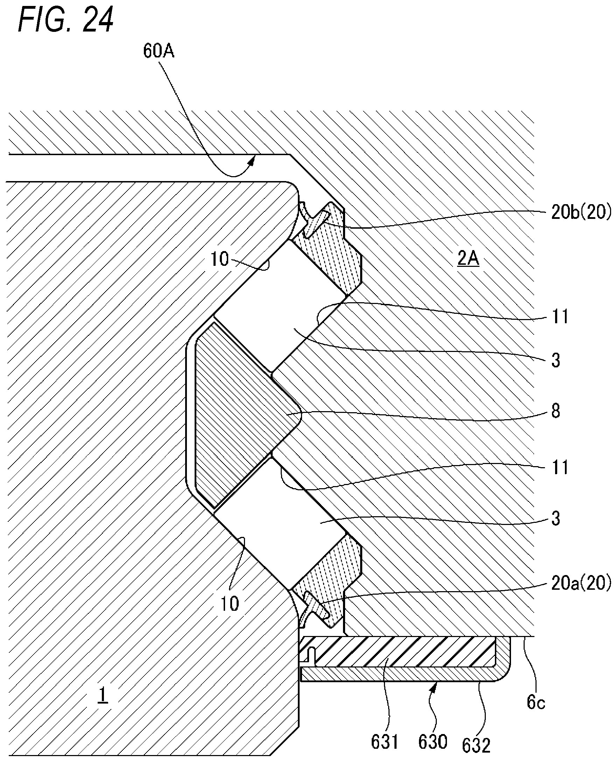

FIG. 24 is a schematic cross-sectional view of a guide rail and a slider in a linear motion guide device according to a fifth embodiment of the present invention, which is taken orthogonally to a longitudinal direction of the guide rail.

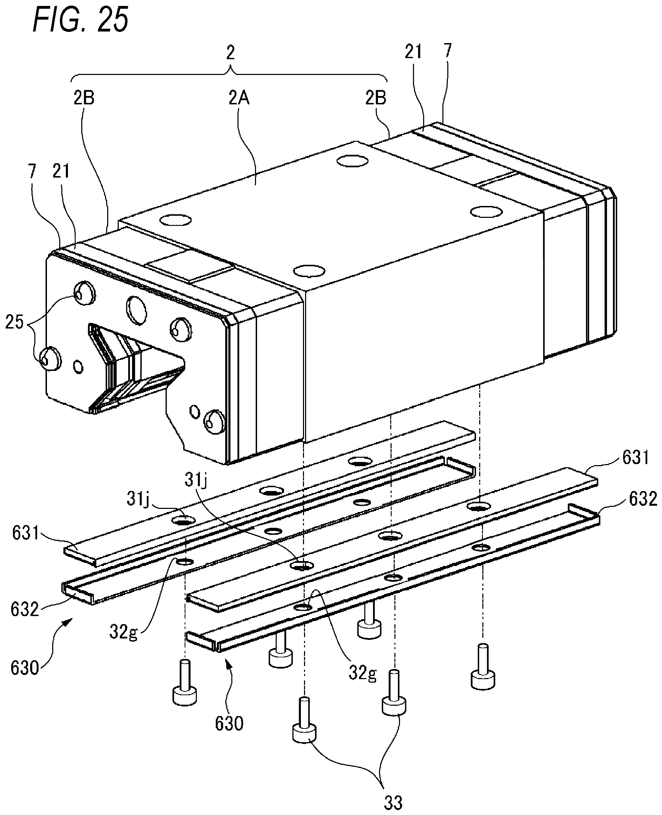

FIG. 25 is a partially exploded perspective view of the slider shown in FIG. 24.

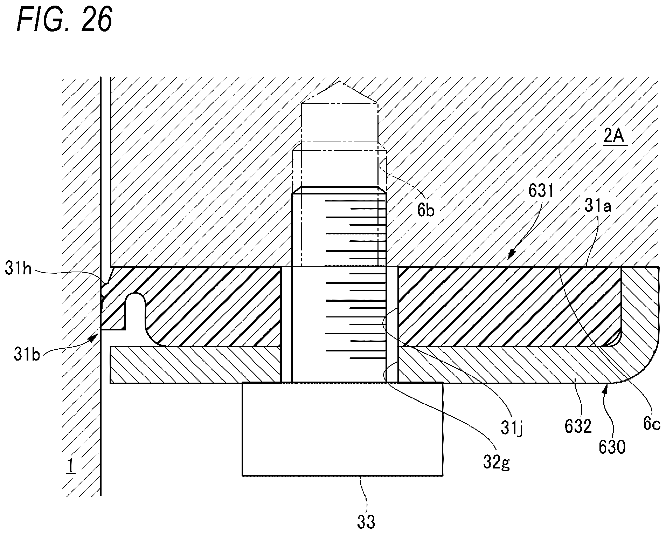

FIG. 26 is a cross-sectional view illustrating an attachment state of an under seal to a slider body.

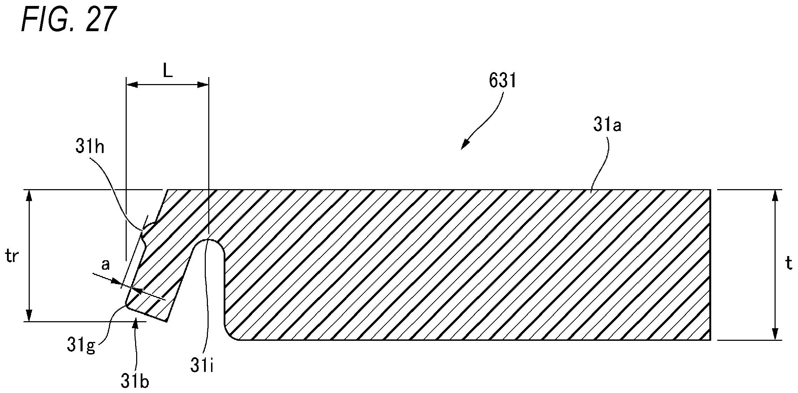

FIG. 27 is an enlarged cross-sectional view of an under seal taken orthogonally to a longitudinal direction.

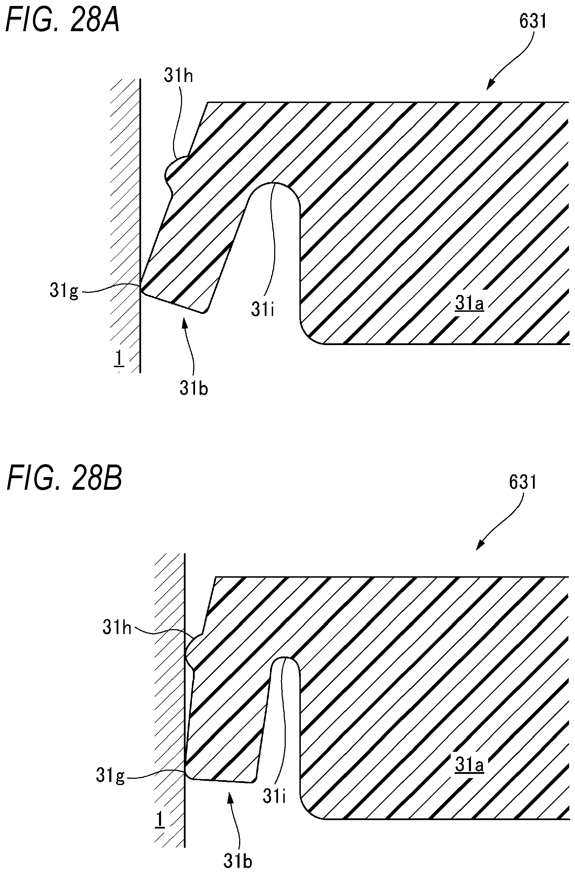

FIG. 28A is an enlarged view of a main part of an under seal used in a low friction application, and FIG. 28B is an enlarged view of a main part of an under seal used in a strict dustproof application.

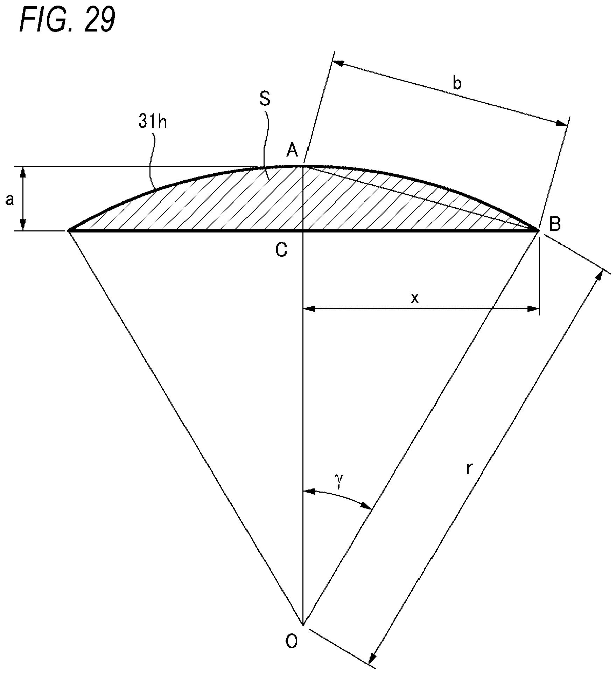

FIG. 29 is an illustrative diagram illustrating a correlation between a circular arc radius and a protrusion amount of an auxiliary lip.

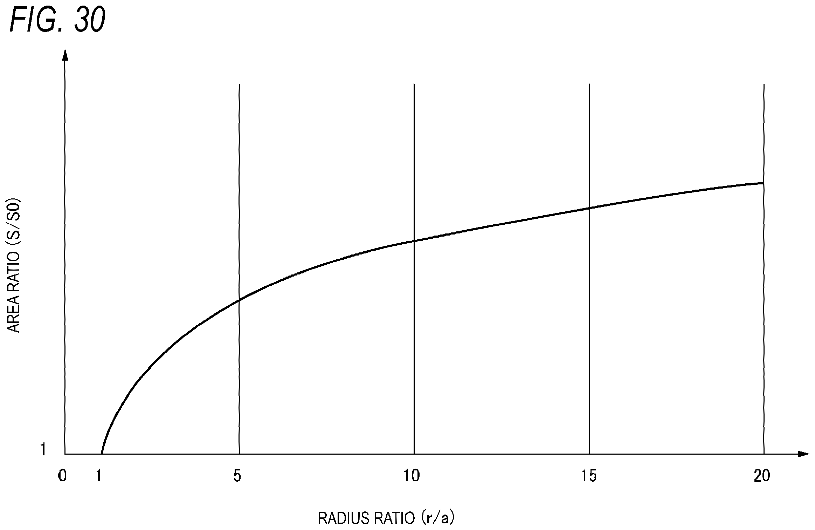

FIG. 30 is a graph illustrating a correlation between a radius ratio and a cross-sectional area ratio of an auxiliary lip.

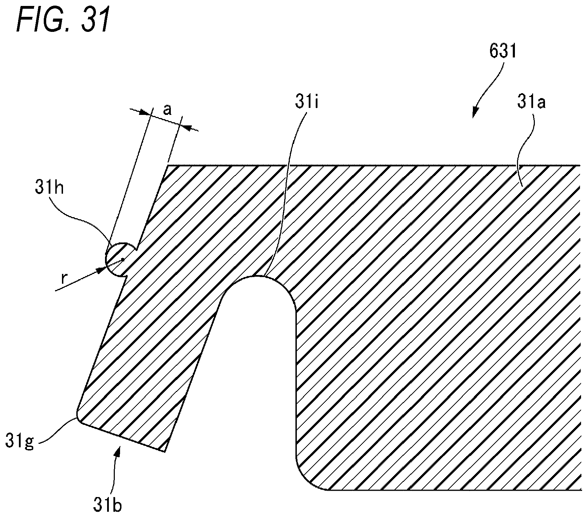

FIG. 31 is a reference diagram illustrating an auxiliary lip whose circular arc radius is less than a protrusion amount.

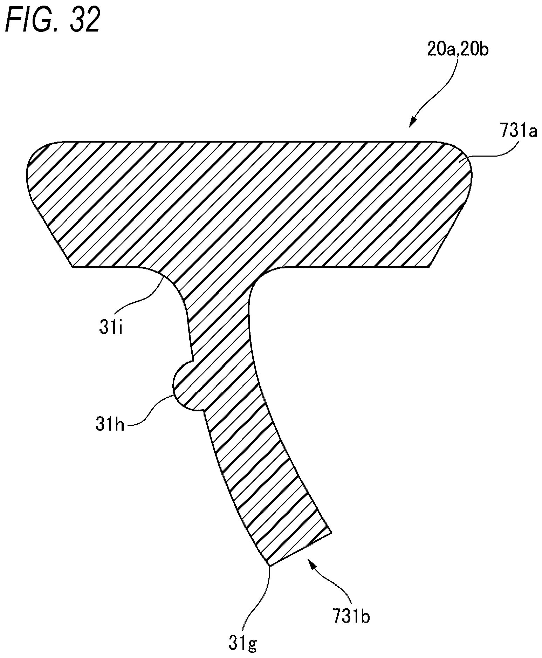

FIG. 32 is a cross-sectional view of an inner seal in a direction orthogonal to a longitudinal direction of a guide rail.

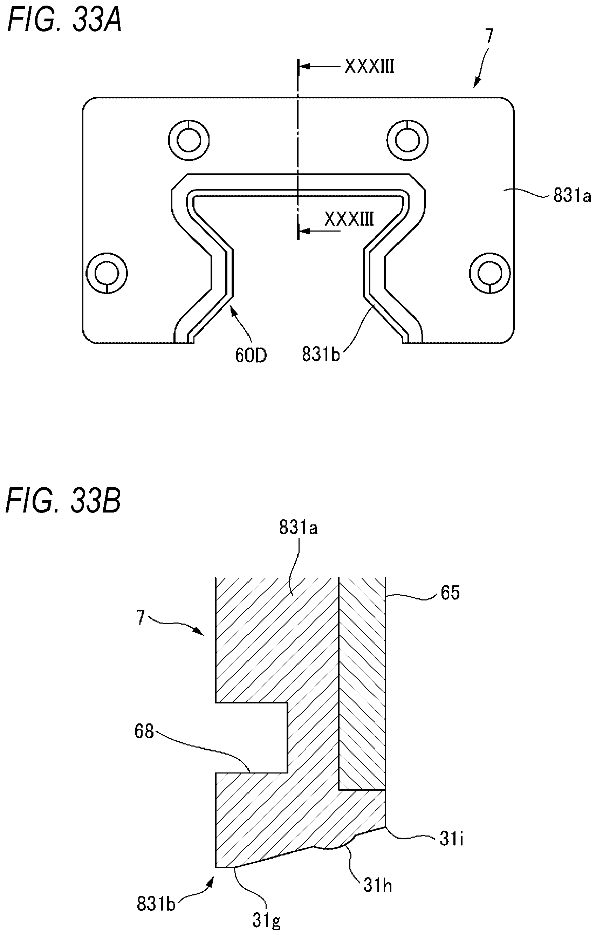

FIG. 33A is a front view of a side seal, and FIG. 33B is a cross-sectional view taken along a line XXXIII-XXXIII in FIG. 33A.

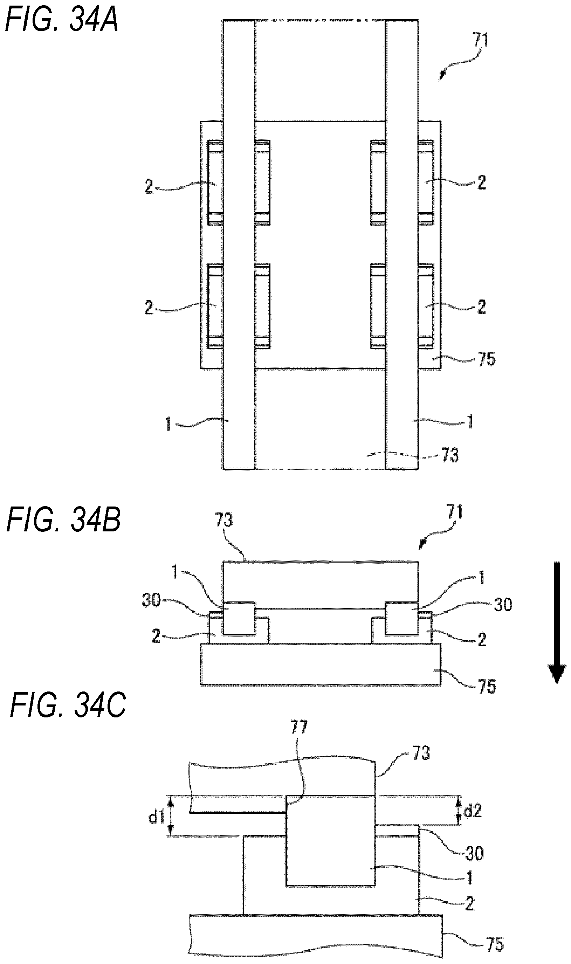

FIG. 34A is a plan view in which a table of a transporting device including a linear motion guide device is omitted, FIG. 34B is a front view of the transporting device in FIG. 34A which includes the table, and FIG. 34C is an enlarged view of FIG. 34B.

Description of Embodiments

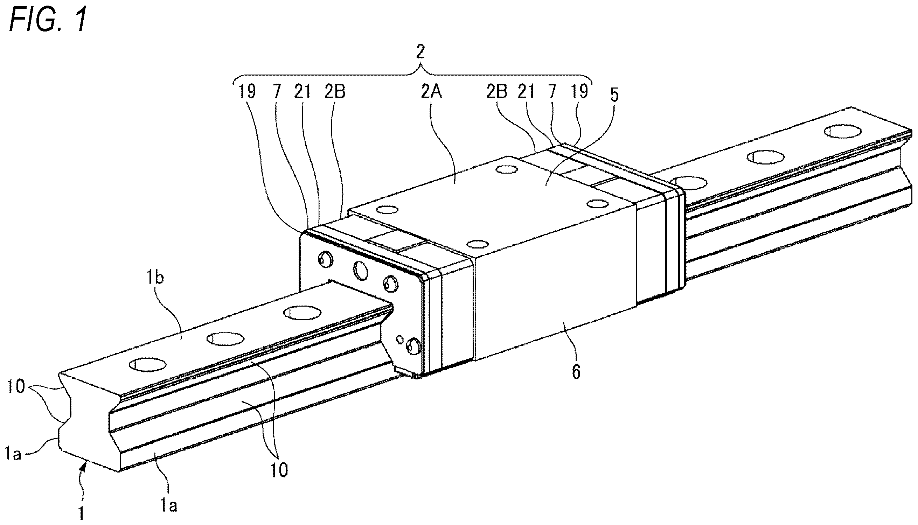

Hereinafter, linear motion guide devices according to embodiments of the present invention will be described with reference to FIGS. 1 to 34.

(First Embodiment)

As illustrated in FIG. 1, a linear motion guide device according to a first embodiment includes a guide rail 1 that extends in an axial direction, and a slider 2 that straddles the guide rail 1 and is assembled so as to be relatively movable in an axial direction of the guide rail 1.

Upper and lower guide rail-side track surfaces 10 are formed on both left and right side surfaces 1a and 1a of the guide rail 1 along the axial direction of the guide rail 1.

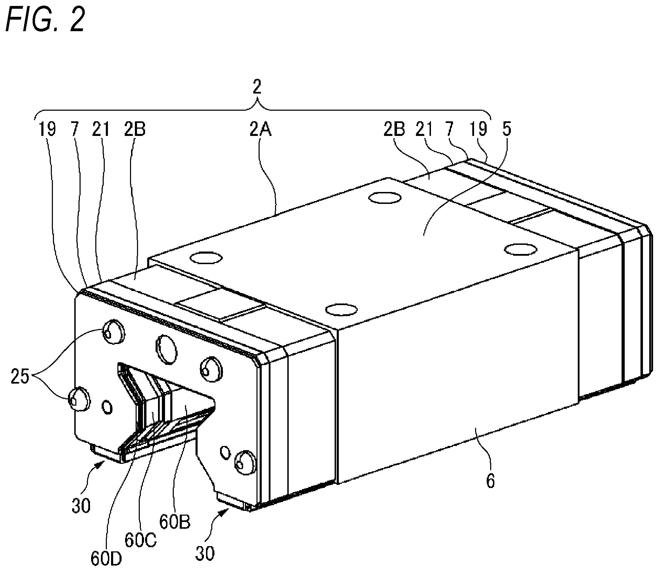

As illustrated in FIGS. 1 and 2, the slider 2 includes slider end surface components that are detachably attached to both end portions of the slider body 2A in the axial direction, and a slider body 2A. As the slider end surface components, an end cap 2B, a lubrication unit 21, a side seal 7, an attachment plate 19, and the like are exemplified. Other slider end surface components include various dustproof components and the like.

The slider body 2A includes an upper portion 5 along an upper surface 1b of the guide rail 1 and two leg portions 6 extending downward from both left and right sides of the upper portion 5, and is formed to have a substantially U cross-sectional shape. Similarly to the slider body 2A, the end caps 2B and 2B also have a substantially U cross-sectional shape so as to straddle the guide rail 1.

Further, the side seals 7 and 7 formed to have a cross-sectional shape similar to that of the end cap 2B are mounted on an outer end surface of the end cap 2B. The side seals 7 and 7 are in sliding contact with the upper surface 1b and both left and right side surfaces 1a and 1a of the guide rail 1, and seal a gap between the guide rail 1 and the slider 2, from above an opening of the gap and at an end surface side in the axial direction of the slider 2.

Further, the lubrication unit 21 is made of a synthetic resin in which lubricating oil is contained in a large number of air bubbles, is provided between the end cap 2B and the side seal 7, and is capable of supplying the lubricating oil to the guide rail-side track surface 10 for a long period of time.

The side seals 7, the lubrication unit 21, and the end caps 2B are fastened and fixed to the slider body 2A by screws 25 or the like via the attachment plate 19.

Further, the side seals 7 and the lubrication unit 21 also have a substantially U cross-sectional shape so as to straddle the guide rail 1. That is, in the slider body 2A, the end caps 2B, the lubrication unit 21, and the side seals 7, a recessed portion for accommodating the guide rail 1 is formed. A recessed portion 60A of the slider body 2A is illustrated in FIG. 24, which will be described below, and a recessed portion 60B of each end cap 2B, a recessed portion 60C of the lubrication unit 21, and a recessed portion 60D of the side seal are illustrated in FIG. 2.

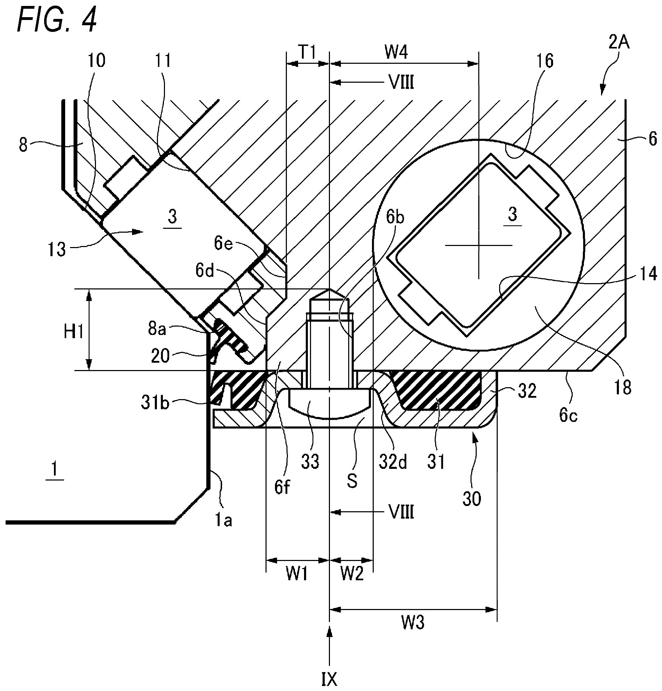

As illustrated in FIG. 4, two slider-side track surfaces 11 (only one is illustrated in FIG. 4) facing the two guide rail-side track surfaces 10 respectively are formed on an inner side surface of each leg portion 6 of the slider body 2A.

Further, a rolling element rolling path 13 having a substantially rectangular cross-sectional shape and extending in the axial direction is formed on both sides between the guide rail-side track surface 10 of the guide rail 1 and the slider-side track surface 11 of the slider 2. In the rolling element rolling path 13, a plurality of cylindrical rollers 3 as rolling elements are rotatably mounted and are held by a retainer 8, and the slider 2 moves in the axial direction along the guide rail 1 via rolling of the cylindrical rollers 3.

A spacer (not illustrated) is interposed between the plurality of cylindrical rollers 3, and the cylindrical rollers 3 are guided by the spacer to roll in the rolling element rolling path 13.

Further, a rolling element return hole 16 that is parallel to the rolling element rolling path 13 and penetrates in the axial direction is formed in both left and right leg portions 6 of the slider body 2A. A tubular member 18 having an inner surface having a cross-sectional shape conforming to a shape of the cylindrical roller 3 is inserted into the rolling element return hole 16, and constitutes a rolling element return passage 14 to which the plurality of cylindrical rollers 3 rolling in the rolling element rolling path 13 are returned. When the rolling element is a ball, a tubular member having a substantially circular cross-sectional shape may be inserted into the rolling element return hole 16.

A curved direction change path connecting the rolling element rolling path 13 and the rolling element return passage 14 is formed in the end cap 2B, and constitutes an endless circulation path together with the rolling element rolling path 13 and the rolling element return passage 14.

Accordingly, when the slider 2 assembled to the guide rail 1 moves in the axial direction along the guide rail 1, the cylindrical rollers 3 move in a same direction as the slider 2 with respect to the guide rail 1 while rolling in the rolling element rolling path 13, and circulate in the endless circulation path.

As illustrated in FIG. 4, an attachment groove 8a for attaching an inner seal 20 is formed at a lower end of the retainer 8. The inner seal 20 seals a gap between the side surface 1a of the guide rail 1 and an inner surface of the retainer 8. Note that the inner seal 20 includes an opening-opposite-side inner seal 20b as illustrated in FIG. 24, which will be described below, in addition to an opening side inner seal illustrated in FIG. 4.

Further, in order to seal, at a tip side of the leg portion 6, a gap between the side surface 1a of the guide rail 1 and an inner surface of the slider 2, an under seal 30 attached to the fixing surface of the slider 2, that is, a lower surface 6c of the slider body 2A is provided. The under seal 30 seals a gap formed between the guide rail 1 and each of the slider 2, the lubrication unit 21 and the side seal 7. Hereinafter, the under seal 30 will be described.

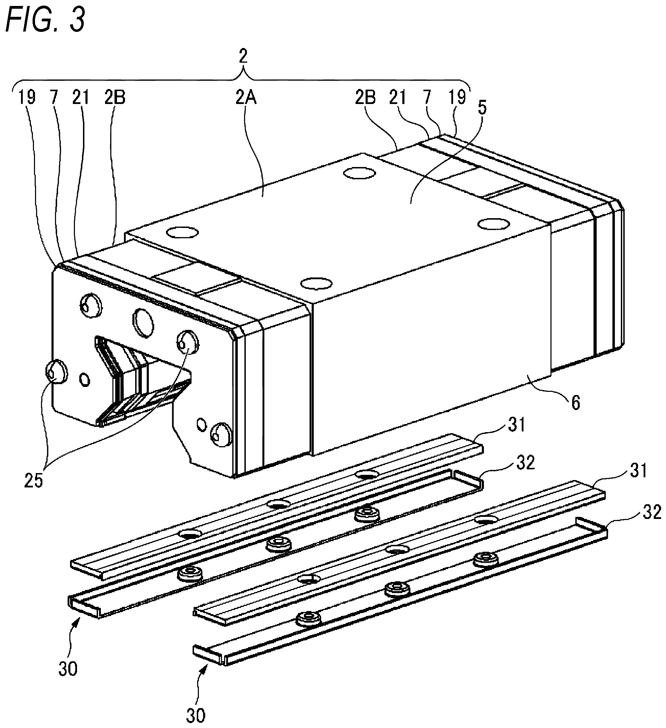

As illustrated in FIGS. 3 to 6C, the under seal 30 includes a seal member 31 and a seal cover 32 for attaching the seal member 31 to the leg portion 6. The seal cover 32 protrudes from the lower surface 6c of the leg portion 6 toward a guide rail 1 side.

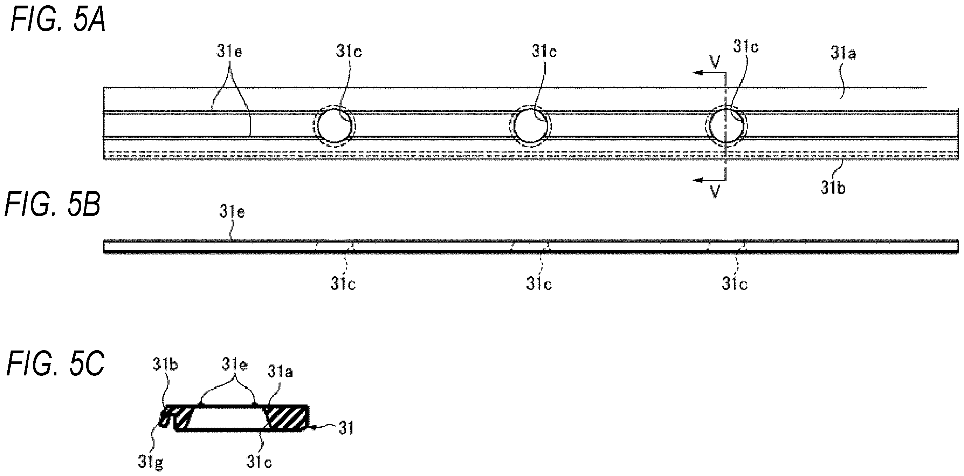

As illustrated in FIG. 5, the seal member 31 made of a soft material such as rubber or resin has an elongated rectangular plate-like seal member body 31a extending in a longitudinal direction of the slider 2, and a lip portion 31b that is formed at a tip in a direction of extending from the seal member body 31a toward the guide rail 1 and that has a blade-like main lip 31g in contact with the guide rail 1. A plurality of (three in the present embodiment) circular fitting holes 31c are formed in the seal member body 31a at predetermined intervals and penetrate the seal member body 31a in a thickness direction thereof. The seal member 31 has a body-side lip portion 31e that protrudes toward the lower surface 6c of the slider body 2A and a lower surface of a slider end portion component and that extends along a moving direction of the slider 2.

It is preferable that the material constituting the seal member 31 has relatively high elasticity and abrasion resistance so as to improve sealing performance and service life thereof. As an example of the seal member 31, a rubber material having oil resistance such as nitrile rubber or fluororubber, or a thermoplastic polyester elastomer is preferable.

Although soft steel can also be used, since abrasion of a contact portion is concerned, it is necessary to reduce a lip thickness as much as possible so as to obtain a spring property.

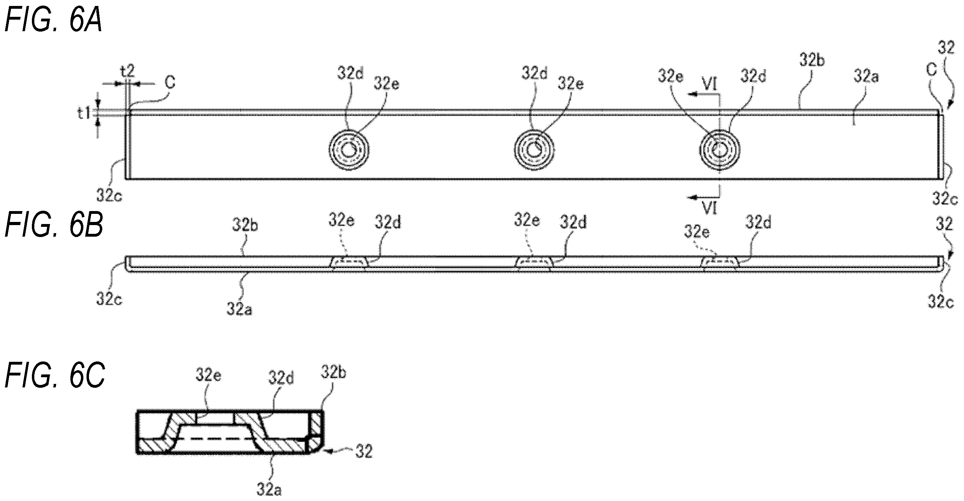

As illustrated in FIG. 6, the seal cover 32 made of hard plastic, metal (steel), or the like has an elongated rectangular plate-like bottom wall portion 32a, a side wall portion 32b connected and bent from the bottom wall portion 32a along one edge of the bottom wall portion 32a, and an end wall portion 32c connected and bent from the bottom wall portion 32a at both ends in a longitudinal direction of the bottom wall portion 32a. In the bottom wall portion 32a, a plurality of fitting protrusions 32d (three in the present embodiment) are formed at positions away from the side wall portion 32b and the end wall portion 32c and at a same pitch as the fitting holes 31c, and protrude toward a side to which the side wall portion 32b and the end wall portion 32c are bent. A circular opening 32e is formed in a top wall of each fitting protrusion 32d. The bottom wall portion 32a is a flat surface having no step except for the fitting protrusions 32d.

Particularly, in the present embodiment, the seal cover 32 is made of a metal plate material having a uniform thickness, and the side wall portion 32b and the end wall portion 32c are all formed by being bent from the bottom wall portion 32a. Therefore, as illustrated in FIG. 6, a thickness t1 of the side wall portion 32b is substantially equal to a thickness t2 of the end wall portion 32c.

Further, as illustrated in FIG. 7A, an inner peripheral surface of the fitting hole 31c of the seal member 31 is an inner tapered surface 31d in a tapered shape (truncated cone shape), and an outer peripheral surface of the fitting protrusion 32d of the seal cover 32 is an outer tapered surface 32f in a tapered shape (truncated cone shape) whose diameter decreases as getting away from the bottom wall portion 32a.

Therefore, as illustrated in FIG. 7B, when the seal member 31 is assembled to the seal cover 32, the inner tapered surface 31d and the outer tapered surface 32f are in contact with each other, and the fitting hole 31c and the fitting protrusion 32d are fitted to each other and positioned relative to each other. Accordingly, a position of the lip portion 31b is determined with respect to the opening 32e through which a screw 33 (FIG. 4) is inserted. Even if the seal member 31 is to be assembled upside down, the fitting hole 31c and the fitting protrusion 32d cannot be fitted together. Therefore, by proper fitting between the fitting hole 31c and the fitting protrusion 32d, the lip portion 31b is set in a downward orientation as a prescribed orientation, thereby preventing erroneous assembling. Further, by preventing displacement of the seal member 31 with respect to the seal cover 32, a restraining force of the seal also increases.

Further, the under seal 30 in which the seal member 31 and the seal cover 32 are integrated is attached to the lower surface 6c of the leg portion 6 using the screw (fastening member) 33. Specifically, the under seal 30 is disposed in such a manner that the seal member 31 is sandwiched between the seal cover 32 and the lower surface 6c of the leg portion 6, and thereafter, the screw 33 is inserted to pass through the opening of the fitting protrusion 32d and the fitting hole 32e and screwed into a screw hole 6b formed in the lower surface 6c of the leg portion 6. Accordingly, the seal member 31 can be fixed to the lower surface 6c of the leg portion 6 via the seal cover 32.

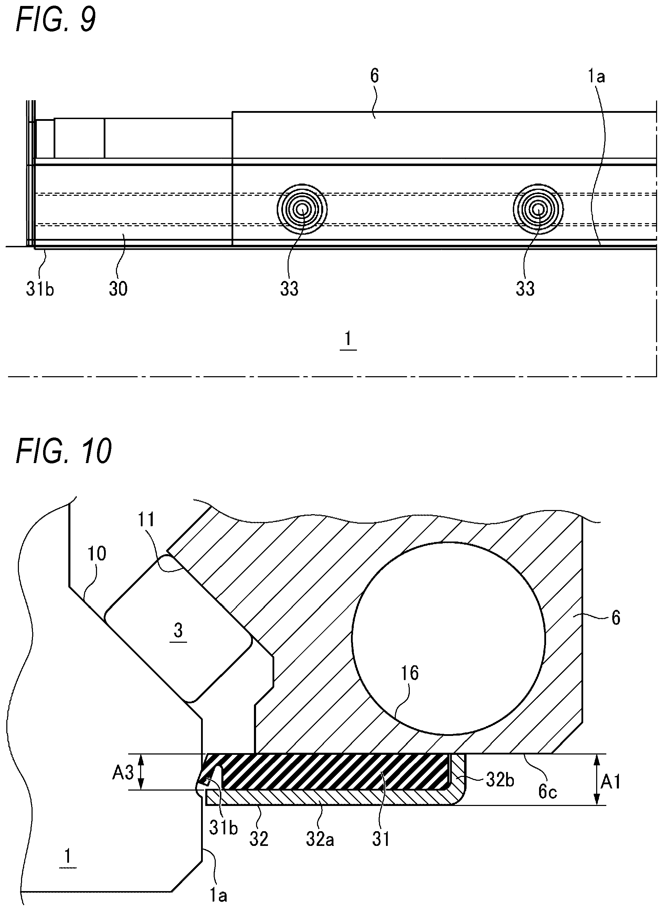

Referring to FIGS. 8 and 10, a thickness A1 of the side wall portion 32b in a height direction is designed to be substantially equal to a thickness A2 of the end wall portion 32c in a height direction.

The seal cover 32 of the present embodiment is fixed with the screw 33, and alternatively, may be fixed using another fastening member such as a rivet.

At this time, since the position of the lip portion 31b is determined with respect to the opening 32e as described above, the main lip 31g can abut on the side surface 1a of the guide rail 1 at an appropriate abutment margin. Further, since an upper end of the fitting protrusion 32d directly abuts on the lower surface 6c, reliable fastening is possible and excessive compression of the seal member 31 is prevented, thereby preventing deformation and breakage of the seal member 31. A head of the screw 33 is accommodated in a space SP in the fitting protrusion 32d and does not protrude downward from the seal cover 32, and interference with other components can be prevented.

Here, in the present embodiment, the lip portion 31b of the seal member 31 which is inclined toward the guide rail 1 is formed over an entire length of the seal member 31 in a longitudinal direction thereof (same direction as a longitudinal direction of the guide rail 1). The main lip 31g of the lip portion 31b abuts on the side surface 1a of the guide rail 1, and is in sliding contact with the side surface 1a of the guide rail 1 when the slider 2 and the guide rail 1 move relative to each other. In the linear motion guide device, the lip portion 31b prevents a foreign matter from entering between the side surface 1a of the guide rail 1 and the slider 2.

The body-side lip portion 31e extends along the moving direction of the slider 2 on a surface that faces the lower surface 6c of the slider body 2A and lower surfaces of the slider end surface components, and abuts on both the lower surface 6c of the slider body 2A and the lower surfaces of the slider end surface components. The pair of body-ide lip portions 31e are spaced apart from each other in a direction orthogonal to the longitudinal direction of the guide rail 1 (a width direction of the seal member 31) and are provided parallel to each other. In the linear motion guide device, entry of a foreign matter from an abutting surface between the lower surface 6c of the slider body 2A and the under seal 30 can be prevented by the body-side lip portion 31e. In the present embodiment, each of the pair of body-side lip portions 31e is formed such that an apex side thereof in contact with the lower surface 6c of the slider body 2A has a triangular cross-sectional shape.

Accordingly, the under seal 30 abuts on both the lower surface 6c of the slider body 2A and the lower surfaces of the slider end surface components (as illustrated in FIG. 8, a lower surface 26 of the end cap 2B, a lower surface 27 of the lubrication unit 21, a lower surface 28 of the side seal 7, and a lower surface 29 of the attachment plate 19). Further, the under seal 30 covers the lower surface 6c of the slider body 2A and the lower surfaces of the slider end surface components over substantially an entire length of the slider 2 in the moving direction.

Therefore, even if there is a step in the lower surface 6c of the slider body 2A or in the lower surface of the slider end surface components, the body-side lip portion 31e is deformed to abut on each lower surface 6c. Therefore, there is no occurrence of a gap between the body-side lip portion 31e and the lower surfaces of the slider 2 and the slider end surface components, and a high dustproof property and waterproof property can be maintained.

The pair of body-side lip portions 31e are disposed parallel to each other and in line symmetry with the fitting hole 31c interposed therebetween. That is, since the plurality of body-side lip portions 31e are disposed at symmetrical positions with respect to a center of the fitting hole 31c, it is possible to uniformly pressurize the body-side lip portions 31e of both sides. Accordingly, reliable seal efficiency can be obtained, and a high dustproof property and waterproof property can be maintained.

Further, according to the present embodiment, the seal member 31, including a periphery of the fitting hole 31c, is sandwiched and fixed by the bottom wall portion 32a of the seal cover 32, so that stable attachment can be performed.

Particularly, according to the present embodiment, since the side wall portion 32b and the end wall portion 32c that have a height corresponding to a thickness of the seal member 31 are provided in the seal cover 32, side surfaces and end surfaces of the seal member 31 are covered and thus protected. When assembled, the lip portion 31b having the main lip 31g abutting on the side surface 1a of the guide rail 1 is protected by the bottom wall portion 32a of the seal cover 32. Accordingly, the seal member 31 can also be protected in a case where other components are brought into contact with the under seal 30 due to undesired handling or the like. At the same time, since rigidity of the seal cover 32 is increased by providing the side wall portion 32b and the end wall portion 32c, it is possible to reliably attach the under seal 30 to the leg portion 6 while using a lightweight component.

When a metal plate material is bent to form the side wall portion 32b and the end wall portion 32c of the seal cover 32, a force for entire deformation is increased even if a thin plate material is used for weight reduction, and a uniform and large force is applied to the seal member 31 by fastening of the screw 33. Further, since the seal member 31 is continuous over the entire length of the slider 2 and also in the periphery of the fitting hole 31c, a close contact with the lower surface 6c of the leg portion 6 by fastening the screw 33 is possible. Therefore, sealing performance between the seal member 31 and the slider 2 is improved, and the entry of a foreign matter such as a liquid or fine dust therefrom can be prevented. Note that in order to avoid interference with the lip portion 31b, a side surface of the seal cover 32 on a lip portion 31b side is not erected, and the lip portion 31b is unlikely to be damaged since a gap between the side surface 1a and the seal cover 32 is small.

Further, by forming the end wall portion 32c by bending the metal plate material at end sides in the longitudinal direction of the seal, protection for the sealing member 31 in a traveling direction thereof is possible, the seal member 31 is less likely to deform even when coming into contact with a large foreign matter or a hard foreign matter, and it is possible to reduce a possibility that the sealing member 31 is damaged and sealing performance thereof deteriorates.

Further, since the seal cover 32 covers the side surface and end surfaces of the seal member 31, an advantage is presented that the seal member 31 is not exposed to the air or a foreign matter environment and deterioration over time can be suppressed. Accordingly, the seal member 31 is less likely to deform even when coming into contact with a large foreign matter or a hard foreign matter, and it is possible to reduce the possibility that the sealing member 31 is damaged and the sealing performance thereof deteriorates.

According to the linear motion guide device including an under seal according to the present embodiment, a long service life driving is possible even in a foreign matter environment such as dust and a liquid, and therefore, an increase of service life in multiple environments of the linear motion guide device can be realized in applications such as large machines and automobiles.

The thickness A1 of the side wall portion 32b in the height direction is substantially equal to the thickness A2 of the end wall portion 32c in the height direction. Therefore, the seal member 31 having a uniform thickness can be uniformly covered by the side wall portion 32b and the end wall portion 32c, and high dustproof performance can be secured.

Further, as illustrated in FIG. 6, the thickness t1 of the side wall portion 32b is substantially equal to the thickness t2 of the end wall portion 32c. Therefore, since the seal cover 32 can be made by bending a plate material having a certain thickness to erect the end wall portion 32c and the side wall portion 32b, the manufacturability is good.

In the seal cover 32 illustrated in FIG. 6, an end surface edge of the end wall portion 32c and an end surface edge of the side wall portion 32b are brought into contact with each other, and a space C is formed between an end surface of the end wall portion 32c and an end surface of the side wall portion 32b. Therefore, the end wall portion 32c and the side wall portion 32b can be erected independently, and a manufacturing difficulty level at the time of erecting is reduced, which leads to cost reduction.

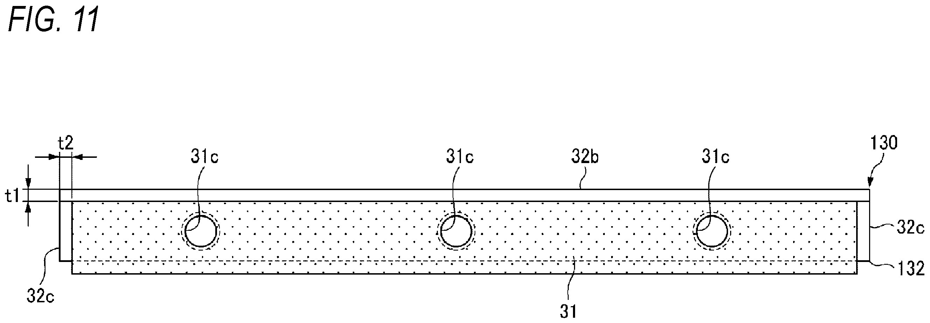

With respect to an under seal 130 illustrated in FIG. 11 serving as a modification of the present embodiment, an end surface of the end wall portion 32c may abut on a side surface of the side wall portion 32b in a seal cover 132.

Next, a shape of the leg portion 6 will be described with reference to FIG. 4. As described above, the leg portion 6 of the slider 2 is formed with the rolling element return hole 16 to which the cylindrical rollers 3 rolling between the guide rail-side track surface 10 and the slider-side track surface 11 are returned, and the screw hole 6b into which the screw 33 is screwed.

Here, in FIG. 4, a center of the screw hole 6b is disposed between the rolling element return hole 16 and the slider-side track surface 11 in a width direction of the slider 2. When a distance from the center of the screw hole 6b to an outer side surface away from the guide rail 1 in the under seal 30 is taken as W3, and a distance from the center of the screw hole 6b to a center of the rolling element return hole 16 is taken as W4, then $W3 \geq W4$.

Since the lower surface (fixing surface) 6c of the leg portion 6 to which the under seal 30 is fixed is formed in the same plane without a step, and $W3 \geq W4$, the lower surface 6c having a sufficient width in a left-right direction is provided. Therefore, the under seal 30 can be reliably and closely fixed to the lower surface 6c of the leg portion 6, and the dustproof property and the waterproof property can be reliably maintained.

Further, in FIG. 4, when a distance from a surface 6d on the guide rail 1 side of the slider 2, which is continuous with the lower surface 6c of the leg portion 6 and intersects the lower surface 6c, to the center of the screw hole 6b is taken as W1 and a distance from a closest portion on the guide rail 1 side of the rolling element return hole 16 to the center of the screw hole 6b is taken as W2, $W1 \geq W2$ is established.

That is, in an lower end of the leg portion 6, a fixing surface expansion portion 6f protruding toward the guide rail 1 side with respect to an inner side surface 6e of the leg portion 6 which is most far from the guide rail 1 in the left-right direction is provided, so that the lower surface 6c is extended and the distance W1 to the surface 6d is increased. Accordingly, the under seal 30 can be reliably attached to the lower surface 6c. With such a configuration, a thickness from the screw hole 6b to the surface 6d can be sufficiently secured. Therefore, deformation, overheating and the like during heat treatment can be prevented, and the manufacturability is good.

Further, when a minimum distance from the inner side surface 6e of the slider 2, which is most far from the guide rail 1 in the left-right direction, to the center of the screw hole 6b is take as T1, $W1 > T1$ is established.

As described, by providing the fixing surface expansion portion 6f in the lower end of the leg portion 6 such that $W1 > T1$, the lower surface 6c can be further widened. Accordingly, the under seal 30 can be reliably and closely fixed to the lower surface 6c.

From a viewpoint of preventing deformation, overheating and the like during heat treatment, it is preferable that $T1 \geq 1$ mm. Further, it is preferable that T1 and W2 are substantially equal, and it is more preferable that $W2 = T1$. Accordingly, a thickness of the leg portions 6 in the width direction from the screw hole 6b can be made substantially uniform, and deformation and overheating during the heat treatment can be prevented.

The dimensions W1, W2, W3, W4, and T1 are all distances in the width direction of the slider 2.

In the embodiment described above, the pair of body-side lip portions 31e are formed so as to pass through the fitting holes 31c due to restriction of a dimension of the seal member 31 in the width direction. However, the pair of body-side lip portions 31e of the seal member 131 may be formed along the moving direction of the slider 2, on outer sides of the fitting holes 31c without passing through the fitting holes 31c in the width direction of a seal member 131 as a modification illustrated in FIG. 12. Therefore, even if a liquid enters from the fitting hole 31c, the body-side lip portion 31e of the present embodiment more reliably prevents inward entry of the liquid to the slider 2.

The seal member 31 is provided with a pair of body-side lip portions 31e in the present embodiment, and the present invention is not limited thereto. Alternatively, the body-side lip portion 31e may be any number of one or more. In addition, in a case of one body-side lip portion 31e, it is preferable that the body-side lip portion 31e is disposed only on a side surface 1a side of the guide rail 1 from the viewpoint of dustproof property and waterproof property.

Further, as a modification illustrated in FIGS. 13 and 14, an under seal 230 may include, in a seal member 231, a pair of end lip portions 31f (only one illustrated in the drawings) that extend in a direction orthogonal to the guide rail 1 (a width direction of the seal member 231) and that are connected to end portions in an extending direction of the body-side lip portion 31e.

Each of the pair of end lip portions 31f is connected to two ends of the pair of body-side lip portions 31e in the extending direction. Therefore, the pair of body-side lip portions 31e and the pair of end lip portions 31f define a space surrounded by ridge lines from four sides. The fitting holes 31c are disposed in this space. In this space, the under seal 230 abuts on the lower surface 6c of the slider body 2A to form a closed space 69. Therefore, even if a liquid enters from the fitting hole 31c, the liquid remains in the closed space 69, and inward entry of the liquid to the slider 2 is prevented.

In the under seal 230 according to this modification, the end lip portions 31f abut on on lower surfaces of the slider end surface components (the lower surface 29 of the attachment plate 19 and the lower surface 28 of the side seal 7). Entry of a foreign matter from an abutting surface between the under seal 230 and the lower surfaces of the slider end surface components is prevented by the end lip portions 31f.

When the screw 33 is tightened, the pair of body-side lip portions 31e and the end lip portions 31f are elastically deformed at the time when an upper end of the fitting protrusion 32d abuts on the lower surface 6c of the slider body 2A, and an upper surface of the seal member body 31a also comes into contact with the lower surface 6c. Accordingly, the closed space 69 is not visible, but in FIG. 14, the closed space 69 is illustrated for convenience of description.

(Second Embodiment)

Next, an under seal 330 according to a second embodiment will be described with reference to FIGS. 15 and 16. In the embodiment described above, the seal cover 32 is formed by pressing a metal plate material, but a seal cover 332 of the present embodiment is formed by resin injection molding as illustrated in FIG. 15.

In the seal cover 332, the fitting protrusion 32d does not have the space SP for accommodating a head of the screw 33, and the head of the screw 33 protrudes downward from the bottom wall portion 32a of the seal cover 32. In this case, the opening 32e formed in the fitting protrusion 32d is formed of a through-hole having a uniform inner diameter along a thickness direction of the under seal 330, and an outer peripheral surface of the fitting protrusion 32d is in a tapered shape as in the first embodiment.

As illustrated in FIG. 16, the fitting hole 31c having a tapered shape is formed in a seal member 331 so as to fit with the fitting protrusion 32d, in accordance with a shape of the seal cover 332.

Other configurations and operations are the same as those of the first embodiment described above.

(Third Embodiment)

Next, an under seal 430 according to a third embodiment will be described with reference to FIGS. 17A and 17B. As illustrated in FIG. 17A, a seal cover 432 of the present embodiment has the side wall portion 32b and the end wall portions 32c removed as compared with the seal cover 32 of the first embodiment. Accordingly, manufacturing cost of a seal cover 432 can be reduced. The seal member 31 is the same as those of the above-described embodiments.

Also in the present embodiment, when the seal member 31 is assembled to the seal cover 432, the inner tapered surface 31d and the outer tapered surface 32f are brought into contact with each other, so that the fitting hole 31c and the fitting protrusion 32d are fitted to each other to be positioned relative to each other.

Other configurations and operations are the same as those of the first embodiment described above.

(Fourth Embodiment)

Next, an under seal 530 according to a fourth embodiment will be described with reference to FIGS. 18A to 20B. The under seal 530 of the present embodiment includes a seal member 531 and a seal cover 532 for attaching the seal member 531 to the leg portion 6.

As illustrated in FIGS. 18A to 18C, the seal member 531 has a plurality of (three in the present embodiment) rectangular fitting holes 31c at predetermined intervals. As illustrated in FIG. 20A, one side surface of the fitting hole 31c is an inner tapered surface 31d1. Meanwhile, as illustrated in FIGS. 19A to 19C, the seal cover 532 has, in the bottom wall portion 32a, a plurality of (three in the present embodiment) fitting protrusions 32d having a rectangular cross-sectional shape at a same pitch as the fitting holes 31c. The circular opening 32e is formed in a top wall of each fitting protrusion 32d. As illustrated in FIG. 20A, one side surface of the fitting protrusion 32d is an outer tapered surface 32f1. That is, the fitting protrusion 32d of the present embodiment is formed by cutting a part of a plate material in a rectangular shape, and the fitting hole 31c is formed in accordance with this shape.

Therefore, as illustrated in FIG. 20B, when the seal member 531 is assembled to the seal cover 532, the inner tapered surface 31d1 and the outer tapered surface 32f1 come into contact with each other, and the fitting hole 31c and the fitting protrusion 32d are fitted to each other and positioned relative to each other. Accordingly, a position of the lip portion 31b is determined with respect to the opening 32e through which the screw 33 (FIG. 4) is inserted.

Other configurations and operations are the same as those of the first embodiment described above.

A method for assembling the linear motion guide device by using the under seal 30 of the first embodiment will be described. FIG. 21 is a cross-sectional view illustrating the slide 2, and a jig 40 according to the present embodiment which is used when assembling the under seal 30 to the slider 2. A cross-sectional shape of the jig 40 is similar to that of the guide rail 1, but the jig 40 and the guide rail 1 are different in that a recessed groove 42 is provided along the axial direction on a side surface (facing surface) 41 facing the leg portion 6, and that the side surface 41 protrudes further toward a leg portion 6 side than the side surface 1a of the guide rail 1.

Hereinafter, a method for assembling the under seal 30 to the slider 2 by using the jig 40 will be described. First, as illustrated in FIG. 21, the jig 40 is disposed in the slider 2. Next, in a state where an inner side edge of the seal cover 32 of the under seal 30 abuts on the side surface 41 of the jig 40, the lip portion 31b of the seal member 31 is accommodated in the recessed groove 42, and the under seal 30 is attached to the leg portion 6 using the screw 33 (adjusting step). By fixing the under seal 30 to the leg portion 6 such that the inner side edge of the seal cover 32 abuts on the side surface 41, an abutment margin of the main lip 31g of the lip portion 31b of the seal member 31 is appropriate.

Thereafter, the jig 40 is removed and the guide rail 1 is assembled (assembling step). As described above, since the seal member 31 is positioned with respect to the seal cover 32 with high accuracy, the seal cover 32 abuts on the side surface 41, so that the abutment margin of the main lip 31g is secured with high accuracy when assembling the guide rail 1. Since the seal cover 32 is not in contact with the side surface 1a of the guide rail 1 when the guide rail 1 is assembled (see FIG. 4), there is no occurrence of damaging the guide rail 1.

FIG. 22 is a cross-sectional view illustrating the slider 2, and another jig 40A which is used when assembling the under seal 30 to the slider 2. The jig 40A includes a base 43 disposed with respect to the slider 2, and a block-shaped adjustment portion 44 whose position is adjustable with respect to the base 43. The base 43 has a shape similar to that of the guide rail 1, and forms the recessed groove 42 together with an upper surface of the adjustment portion 44. The position of the adjustment portion 44 can be adjusted with respect to the base 43, and further the adjustment portion 44 is fastened to the base 43 with a screw 45.

Hereinafter, a method for assembling the under seal 30 to the slider 2 by using the jig 40A will be described. In a pre-process, positional adjustment is performed in advance such that a side surface 46 of the adjustment portion 44 abuts on an inner side edge of the seal cover 32 of the under seal 30 at an appropriate position, and while maintaining such a state, the adjustment portion 44 is fastened to the base 43 with the screw 45.

Next, as illustrated in FIG. 22, the jig 40A is disposed in the slider 2, and in a state where the inner side edge of the seal cover 32 of the under seal 30 abuts on the side surface 46 of the adjustment portion 44, the lip portion 31b of the seal member 31 is caused to be accommodated in the recessed groove 42 of the base 43, and the under seal 30 is attached to the leg portion 6 using the screw 33.

Thereafter, the jig 40A is removed, and the guide rail 1 is assembled. Since the position of the side surface 46 of the adjustment portion 44 which abuts on the inner side edge of the seal cover 32 can be finely adjusted, an abutment margin of the main lip 31g of the lip portion 31b can be finely adjusted.

Other configurations and operations are the same as those of the first embodiment described above.

When assembling the under seal 30 to the slider 2 by using the jig 40 or 40A, the position of the seal cover 32 is preferably adjustable so as to appropriately abut on the side surface 41 or the side surface 46. Therefore, as in a seal cover 832 illustrated in FIG. 23A, an inner diameter φ2 of the opening 32e may be increased with respect to an outer diameter of the screw 33.

Alternatively, as in a seal cover 932 illustrated in FIG. 23B, the opening 32e may be a long hole whose longitudinal direction is a direction orthogonal to the axis of the guide rail 1. Accordingly, a gap is formed between the opening 32e and the screw 33 at least in the direction orthogonal to the axis of the guide rail 1, and the seal covers 832 and 932 can appropriately abut on the side surface 41 or the side surface 46.

When the seal covers 832 and 932 illustrated in FIGS. 23A and 23B are used, the fitting hole 31c of the seal member is formed to correspond to the shape of the fitting protrusion 32d.

(fifth Embodiment)

Next, a linear motion guide device according to a fifth embodiment will be described with reference to FIGS. 24 to 31. The present embodiment is different from the above-described embodiments in configuration of a seal component including an under seal.

As illustrated in FIGS. 24 to 26, an under seal 630 of the present embodiment includes a seal member 631 that is formed in a plate shape and has one long side extending toward a side surface of the guide rail 1, and a seal cover 632 for holding the seal member 631 and attaching the seal member 631 to the leg portion 6. Through-holes 31j and 32g are formed in the seal member 631 and the seal cover 632, respectively.

As illustrated in FIG. 26, the screw 33 is inserted into the through-holes 31j and 32g, and is screwed into the screw hole 6b formed in the slider body 2A. Accordingly, the under seal 630 is fastened and fixed to the slider body 2A by the screw 33.

Here, a dimensional difference between an inner diameter of the through-holes 31j and 32g and an outer diameter of the screw 33 is used as an adjustment amount of a seal fastening margin. When the dimensional difference is insufficient as the adjustment amount of the seal fastening margin, the through-holes 31j and 32g may be formed as long holes.

FIG. 27 is an enlarged cross-sectional view of the seal member 631 taken orthogonally to a longitudinal direction thereof.

The seal member 631 includes the seal member body 31a extending in a longitudinal direction of the slider 2, and the lip portion 31b that is formed at a tip in a direction of extending from the seal member body 31a toward the guide rail 1 (see FIG. 26) and that has the main lip 31g in contact with the guide rail 1.

The seal member body 31a is a plate-like member, and the lip portion 31b extends from a connection portion 31i side, which is one end in a plate thickness direction of the seal member body 31a, toward the other end in the plate thickness direction. The lip portion 31b extends in a direction inclined from the plate thickness direction of the seal member body 31a, and is rotatable about the connection portion 31i by elastic deformation.

An auxiliary lip 31h is formed on a surface of the lip portion 31b, which is in contact with the guide rail 1, between a section from the main lip 31g to the connection portion 31i connected to the seal member body 31a. That is, the auxiliary lip 31h is disposed between the main lip 31g serving as a contact start point with a contact counterpart side and a rotation center (connection portion 31i) of the main lip 31g. The auxiliary lip 31h has a circular arc-shaped cross section orthogonal to the longitudinal direction, and is formed to protrude outward (toward the contact counterpart side). In a no-load state, the main lip 31g is away from the seal member body 31a by a distance L from the connection portion 31i. The distance L is appropriately set according to a material, application, or the like of the seal member.

FIG. 28A is an enlarged view of a main part of the seal member 631 used in a low friction application, and FIG. 28B is an enlarged view of a main part of the seal member 631 used in a strict dustproof application.

Since the auxiliary lip 31h is disposed between the main lip 31g and the connection portion 31i serving as the rotation center of the lip portion 31 b, it is possible to easily adjust a contact state with the contact counterpart side or adjust to non-contact in accordance with deformation of the lip portion 31b by the above-described fastening margin.

That is, a state illustrated in FIG. 28A is a single-lip seal state where only the main lip 31g comes into contact with the guide rail 1 that is a contact counterpart, and the seal is with low friction force. On the other hand, a state illustrated in FIG. 28B is a double-lip seal state where the main lip 31g and the auxiliary lip 31h both come into contact with the guide rail 1, and sealing efficiency is improved. As described, the state where only the main lip 31g comes into contact with the guide rail and the state where both the main lip 31g and the auxiliary lip 31h come into contact with the guide rail can be selectively set in accordance with a pressing state of the under seal 630 toward the contact counterpart side. That is, the single-lip state and the double-lip state can be selectively set, and the seal efficiency and sliding resistance can be adjusted to an appropriate relationship according to an application purpose. Since the auxiliary lip 31h has a circular arc shape, a constant contact state of the under seal 630 can be secured even when the auxiliary lip 31h comes into contact with the counterpart component (the side surface of the guide rail 1) at any point thereof.

A width tr of the lip portion 31b in the thickness direction illustrated in FIG. 27 is smaller than a thickness t of the seal member body 31a. Accordingly, a width dimension of a seal own body can be made equivalent to that of a standard single-lip seal and a compact configuration is possible.

FIG. 29 is an illustrative diagram illustrating a correlation between a circular arc radius and a protrusion amount of the auxiliary lip 31h.

The auxiliary lip 31h is formed such that a surface thereof in a vertical cross-section in the longitudinal direction of the guide rail described above 1 has a circular arc shape. A contact point between the auxiliary lip 31h and the contact counterpart side differs according to a deformation state of the lip portion 31b (see FIG. 27). If the auxiliary lip 31h is a polygonal lip, the contact state may change depending on a position of the contact point, and as a result, seal friction and seal efficiency may significantly change. In order to avoid the change as much as possible, it is preferable that the auxiliary lip 31h is set in a circular arc shape. By setting the cross-sectional shape described above to a circular arc shape for the auxiliary lip 31h, even when the contact point with the contact counterpart side changes according to the deformation of the lip portion 31b, a constant contact state can be secured.

Further, a cross-sectional area S of the auxiliary lip 31h, which is determined by a circular arc having a circular arc radius r and by a protrusion amount a that is a protrusion height from the surface of the lip portion 31b, is made as small as possible, thereby reducing a contact area with the contact counterpart and reducing the seal friction. The cross-sectional area S of the auxiliary lip 31h is determined by Expression (1) as a function of the circular arc radius r and the protrusion amount a.

Expression (1)

$$S = r^2 Cos^{-1}\left(\frac{r-a}{r}\right) - (r-a)\sqrt{a(2r-a)}$$

The cross-sectional area S is obtained by doubling a difference between a sector ABO and a triangle BCO that are illustrated in FIG. 29, and is expressed by Expression (2).

Expression (2)

$$S = 2\left(\frac{\gamma}{2\pi}\pi r^2 - \frac{(r-a)x}{2}\right) = r^2 Cos^{-1}\left(\frac{r-a}{r}\right) - (r-a)x$$

Based on the triangle BCO, a relationship between the circular arc radius r, a distance x, and the protrusion amount a is expressed by Expression (3).

Expression (3)

$$r^2 = x^2 + (r-a)^2$$

$$x = \sqrt{a(2r-a)}$$

Expression (1) is derived by substituting Expression (3) into Expression (2).

FIG. 30 is a graph illustrating a correlation between a radius ratio (r/a) and an area ratio of the cross-sectional area S of the auxiliary lip 31h.

A curve illustrated in FIG. 30 is a result of plotting a ratio of the cross-sectional area S to a cross-sectional area S0, which is obtained in a case of r = a. The circular arc radius r is changed and the cross-sectional area S is calculated, with the protrusion amount a set as a constant. If the circular arc radius r is 5 times or less of the protrusion amount a, a decrease amount is steep, and the cross-sectional area can be significantly reduced.

FIG. 31 is a reference diagram illustrating the auxiliary lip 31h whose circular arc radius is less than the protrusion amount.

When the circular arc radius r is less than 1 times of the protrusion amount a, a neck is formed at a joint portion between the auxiliary lip 31h and the lip portion 31b. For this reason, a problem occurs in strength of the seal member. An appropriate circular arc radius r of the auxiliary lip 31h is preferably 1 to 5 times of the protrusion amount a.

If the circular arc radius r is 5 times or less of the protrusion amount a, the cross-sectional area S can be significantly reduced. On the other hand, when the circular arc radius of the auxiliary lip 31h is less than the protrusion amount a, a neck is formed at a joint portion between the lip portion 31b and the seal member body 31a, and a problem occurs in strength. Therefore, if the circular arc radius of the auxiliary lip 31h is set in a range of 1 to 5 times of the protrusion amount from the surface of the lip portion 31b, a particularly remarkable effect in suppressing friction and improving the strength is obtained.

Next, an operation of the above configuration of the seal member 631 will be described.

In the linear motion guide device according to the present embodiment, the lip portion 31b of the seal member 631 includes the main lip 31g at a tip portion in contact with the guide rail 1, and the auxiliary lip 31h is provided on a base end side of the main lip 31g. Due to the relative positional relationship between the main lip 31g and the auxiliary lip 31h, adjustment of the contact state with the contact counterpart side or adjustment to the non-contact state in accordance with the deformation of the main lip 31g is possible for the auxiliary lip 31h.

When interference of the seal member 631 with the contact counterpart side is slight, first, the main lip 31g comes into contact with the contact counterpart side. When the interference is increased, both the main lip 31g and the auxiliary lip 31h come into contact with the contact counterpart side. Therefore, the seal member 631 can function as a single-lip seal or a double-lip seal in accordance with the application purpose, and high slidability and high seal efficiency are selectively obtained. In addition, since the auxiliary lip 31h is formed to have a circular arc-shaped cross section orthogonal to the longitudinal direction of the guide rail 1, a constant contact state is easily secured regardless of the change of the contact point.

For example, with a seal member for strict dustproof application, the interference between the contact counterpart side and the main lip 31g is increased to bring the auxiliary lip 31h into contact with the contact counterpart side. On the other hand, with a seal member for low friction application, the interference between the contact counterpart side and the main lip 31g is reduced to obtain a single-lip contact. In this case, there is no occurrence that the main lip 31g and the auxiliary lip 31h come into contact with the counterpart component at the same time.

As described, in the seal member 631, by adjusting the seal fastening margin, it is possible to properly use the contact state according to the application, and the seal efficiency can be improved with a width dimension equivalent to that of the single-lip seal.

The configuration having the auxiliary lip 31h of the present embodiment can also be applied to an opening-side inner seal 20a and the opening-opposite-side inner seal 20b, which are seal components.

As illustrated in FIG. 24, the opening-side inner seal 20a and the opening-opposite-side inner seal 20b are attached to the retainer 8 so as to seal a space surrounded by the guide rail-side track surface 10 and the slider-side track surface 11. The opening-side inner seal 20a and the opening-opposite-side inner seal 20b are seals having a same shape and are disposed in a vertically reversed manner. The seal provided on the opening side of the recessed portion 60A with respect to the track surface is the opening-side inner seal 20a and the seal provided on a side opposite to the opening side is the opening-opposite-side inner seal 20b.

FIG. 32 is a cross-sectional view of the opening-side inner seal 20a (opening-opposite-side inner seal 20b) in a direction orthogonal to the longitudinal direction of the guide rail 1.

The opening-side inner seal 20a and the opening-opposite-side inner seal 20b have a seal member body 731a that extends in the longitudinal direction of the guide rail, and a lip portion 731b that extends from the seal member body 731a toward the guide rail and that comes into contact with the guide rail by the main lip 31g at a tip in an extension direction. In a lip portion 731b, the auxiliary lip 31h protruding outward is formed on a surface in contact with the guide rail, between a section from the main lip 31g to the connection portion 31i connected to the seal member body 731a. The opening-side inner seal 20a and the opening-opposite-side inner seal 20b are long in the longitudinal direction of the guide rail 1, and seal friction is likely to increase. Therefore, the lip portion 731b is formed to be thin so as to reduce the seal friction as much as possible. In order to reduce the seal friction as much as possible, the circular arc radius r is set to be equal to the protrusion amount a (protrusion height) in the auxiliary lip 31h.

An example in which the configuration having the auxiliary lip 31h of the present embodiment is applied to the side seal 7 that is a seal component will be described.

FIG. 33A is a front view of the side seal 7, and FIG. 33B is a cross-sectional view taken along line a line XXXIII-XXXIII in FIG. 33A.

As illustrated in FIG. 33A, the side seal 7 is formed in a substantially U shape as viewed from the front, and presents a shape fitting with both side surfaces and an upper surface of the guide rail 1. As illustrated in FIG. 33B, the side seal 7 has a steel plate 65 disposed as a core metal on a slider body side as viewed from a side, and a seal member body 831a formed so as to cover a portion other than a surface of the steel plate 65 on the slider body side. A lip portion 831b that is thin due to a groove 68 is formed in the side seal 7. The main lip 31g that comes into contact with the guide rail is formed at a tip of the lip 831b, and the auxiliary lip 31h protruding toward a contact counterpart side is formed between a section of the lip portion 831b from the main lip 31g to the connection portion 31i side with the seal member body 831a.

The side seal 7 is a seal for which high dustproof property is required, and the main lip 31g of the lip portion 831b is configured to be thick and highly rigid. As described above, the auxiliary lip 31h has a circular arc radius r of 5 times of the protrusion amount a.

<Application to Linear Motion Guide Device>

FIG. 34A is a plan view in which a table 73 of a transporting device 71 including a linear motion guide device is omitted, FIG. 34B is a front view of the transporting device in FIG. 34A which includes the table 73, and FIG. 34C is an enlarged view of FIG. 34B.

The linear motion guide device including the under seal 30 can be incorporated into the transporting device 71, which is a mechanical device as illustrated in FIGS. 34A to 34C. That is, in the linear motion guide device of the present embodiment, the sliders 2 are fixed, in pairs and in parallel, to an upper surface of a base 75, which is an attachment portion of the transporting device 71, and a pair of guide rails 1 are attached to a lower surface of the table 73, and the table 73 moves linearly with respect to the base 75. In the transporting device 71, the table 73 is disposed on an upper side and the base 75 is disposed on a lower side, with respect to a gravity direction (indicated by an arrow). The guide rail 1 is attached to the table 73 with high accuracy so as to come into contact with a step, that is, a shoulder 77 provided in the table 73.

Here, when the transporting device 71 is used, a foreign matter such as dust may fall from above. Therefore, the under seal 30 may be attached to the sliders 2, which are disposed in parallel on the base 75, only at an outer side thereof as illustrated in FIG. 34C.

This is because a side where the shoulder 77 is provided in the linear motion guide device is covered with the table 73 from above, so the need for dustproof performance is not high, and accordingly the under seal is not attached at the side where the shoulder 77 is provided.

With this configuration, it is possible to secure a large height dimension (d1) from the lower surface 6c of the slider 2 to a bottom surface of the guide rail. Therefore, the slider 2 is less likely to interfere with the shoulder 77 of the table 73, and thus a degree of freedom in design of the transporting device 71 is increased. Meanwhile, since the side where the shoulder 77 is not provided is not covered with the table 73, there is a need for dustproof, and the under seal 30 is attached to the side of each slider 2 where the shoulder 77 is not provided. Although a dimension (d2) in a height direction from a bottom surface portion of the guide rail 1 to the lower surface 6c of the slider 2 is reduced at the outer side in the width direction of each slider 2 (left-right direction in FIG. 34C), the design of the transporting device 71 is not restricted since there is no shoulder 77.

As described, even when the linear motion guide device of the present embodiment is applied to the transporting device 71, since the inner seal 20 (see FIG. 4) and the under seal 30 are separately fixed (see FIG. 4), only the under seal 30 on one side, left or right, in the width direction can be removed. That is, the attachment plate 19 can be configured such that only the under seal 30 on one side is removed as it is. Therefore, the transporting device 71 capable of adjusting the dustproof performance in accordance with a surrounding environment is obtained. Since it is possible to omit only the under seal at an unnecessary portion in the transporting device 71, there is no unnecessary increase of the cost.

Further, according to the transporting device 71 to which the linear motion guide device of the present embodiment is applied, even when the transporting device 71 is used in an environment where dirt, chips, dust, liquid and the like are scattered with respect to a gap formed between the guide rail 1 and the slider 2, entry of a foreign matter into the slider can be prevented and high dustproof performance can be provided.

Therefore, according to the linear motion guide device according to the present embodiment, it is possible to maintain a high dustproof property between the under seal 30 and the lower surfaces of the slider 2 and the slider end surface components.

The present invention is not limited to the above embodiments, and combinations of the respective configurations of the embodiments, or changes and applications made by those skilled in the art based on the claims and the well-known technology are also intended by the present invention and are included within the scope to be protected as defined in the appended claims.

For example, in the first to fourth embodiments, the seal member, which includes the body-side lip portion and the seal member body having the fitting hole, and the seal cover, which includes the fitting protrusion in which the opening is formed, are provided, the fitting protrusion is fitted into the fitting hole of the seal member, and the under seal is attached to the slider.

In the present invention, the seal member, which includes the seal member body having the fitting hole, and the seal cove having the fitting protrusion are provided, the fitting protrusion of the seal cover is fitted into the fitting hole of the seal member, and the under seal is attached to the slider. On the other hand, the seal member body of the seal member may not include the body-side lip portion.

In addition to the above configuration of the first embodiment, the lip portion of the seal member of the fifth embodiment may further include the auxiliary lip.

In the fifth embodiment, the lip portion of the seal member further includes the auxiliary lip. However, the present invention is not limited thereto, and the configuration of the fifth embodiment may be combined with the configuration in which the seal member body has the body-side lip portion.

Alternatively, in the present invention, the configuration of the fifth embodiment may be combined with a configuration in which the seal member, which includes the seal member body having the fitting hole, and the seal cover including the fitting protrusion are provided, the fitting protrusion of the seal cover is fitted into the fitting hole of the seal member, and the under seal is attached to the slider. For example, in this case, as described in the assembling method, it is more preferable that a gap is formed between the opening of the seal cover and the fastening member at least in the direction orthogonal to the axis of the guide rail.

Further, in the above configuration examples, a case where the mechanical device is a transporting device is described as an example, and the mechanical device may be, for example, various machines such as a turning machine, a drilling machine, a boring machine, a milling machine, a toothed wheel cutting machine, and a grinding machine.

According to the mechanical device, a foreign matter such as dirt, dust, chip powder, and chips can be prevented from entering the gap formed between the guide rail and the slider, and smooth rolling of the rolling element can be performed over a long period of time.

This application is based on Japanese Patent Application No. 2017-234350 filed on Dec 6, 2017, Japanese Patent Application No. 2017-234351 filed on Dec 6, 2017, and Japanese Patent Application No. 2018-218340 filed on Nov 21, 20] 8.

Reference Signs List

1 guide rail
1a side surface
1b upper surface
2 slider
2A slider body
2B end cap (slider end surface component)
3 cylindrical roller (rolling element)
6b screw hole
6c lower surface
6d surface
6e inner side surface
7 side seal (slider end surface component, seal component)

8 retainer

8a attachment groove

10 guide rail-side track surface

11 slider-side track surface

13 rolling element rolling path

16 rolling element return hole

18 tubular member

19 attachment plate (slider end surface component)

20a opening-side inner seal (seal component)

20b opening-opposite-side inner seal (seal component)

21 lubrication unit (slider end surface component)

30, 130, 230, 330, 430, 630 under seal (seal component)

31, 131, 231, 331, 531, 631 seal member

31a, 731a, 831a seal member body

31b, 731b, 831b lip portion

31c fitting hole

31d, 31d1 inner tapered surface

31e body-side lip portion

31f end lip portion

31g main lip

31h auxiliary lip

31i connection portion

32, 132, 232, 332, 432, 532, 632, 832, 932 seal cover

32a bottom wall portion

32b side wall portion

32c end wall portion

32d fitting protrusion

32e opening

32f, 32f1 outer tapered surface

33 screw

40, 40A jig

41 side surface

42 recessed groove

43 base

44 adjustment portion

45 screw

46 side surface

71 transporting device (mechanical device)

r circular arc radius

**Claims**

1.  A linear motion guide device, comprising: a guide rail (1) that has a guide rail-side track surface (10) extending in an axial direction thereof; a slider (2) that is mounted so as to straddle the guide rail, has a slider-side track surface (11) facing the guide rail-side track surface (10), and is disposed so as to move relative to the guide rail in the axial direction; a plurality of rolling elements (3) that are rotatably disposed in a rolling element rolling path (13) formed between the guide rail-side track surface and the slider-side track surface; and an under seal (30, 130, 230, 330, 430, 630) that is attached to the slider (2) to seal a gap formed between a side surface of the guide rail and an inner side surface of the slider, wherein the under seal includes: a seal member (31, 131, 231, 331, 531, 631) that includes a seal member body (31a, 731a,831a), a lip portion (31b, 731b, 831b) and a fitting hole (31c), wherein the seal member body extends in a longitudinal direction of the slider, wherein the lip portion is formed at a tip in a direction of extending from the seal member body toward the guide rail and has a main lip in contact with the guide rail, and wherein the fitting hole penetrates the seal member body; and a seal cover (32, 132, 232, 332, 432, 532, 632, 832, 932) that includes a fitting protrusion (32d) in which an opening is formed, and that holds the seal member, and the fitting protrusion is fitted into the fitting hole (31c), and with the fitting protrusion in a state of abutting on a fixing surface of the slider, the under seal is attached to the slider as a fastening member (33) penetrating the opening is fastened to the slider.

2. The linear motion guide device according to claim 1, wherein

the fitting protrusion (32d) has an outer tapered surface,
the fitting hole (31c) has an inner tapered surface, and
the fitting protrusion is fitted into the fitting hole by bringing the outer tapered surface into contact with the inner tapered surface.

3. The linear motion guide device according to claim 1 or 2, wherein the seal cover (32) includes: a bottom wall portion (32a) that supports a lower surface of the seal member body; a side wall portion (32b) that is bent from the bottom wall portion and covers an outer side surface of the seal member body; anda pair of end wall portions (32c) that are bent from the bottom wall portion and cover both end surfaces of the seal member body.

4. The linear motion guide device according to any one of claims 1 to 3, wherein the slider (2) is formed with:

a rolling element return hole (16) to which the plurality of rolling elements rolling between the guide rail-side track surface and the slider-side track surface are returned; and
a screw hole into which the fastening member is screwed,

when viewing from the axial direction of the guide rail, a center of the screw hole is closer to the guide rail than to a center of the rolling element return hole, and a distance from the center of the screw hole to an outer side surface away from the guide rail in the under seal is taken as W3, a distance from the center of the screw hole to the center of the rolling element return hole is taken as W4, and $W3 \geq W4$ is satisfied.

5. The linear motion guide device according to claim 4, wherein
when viewing from the axial direction of the guide rail, a distance from a surface of the slider, which is on a guide rail side and intersects the fixing surface of the slider, to the center of the screw hole is taken as W1, a distance from a closest portion on the guide rail side of the rolling element return hole to the center of the screw hole is taken as W2, and $W1 \geq W2$ is satisfied.

6. The linear motion guide device according to claim 4 or 5, wherein
when viewing from the axial direction of the guide rail, the distance from the surface of the slider, which is on the guide rail side and intersects the fixing surface of the slider, to the center of the screw hole is taken as W1, a minimum distance from an inner side surface of the slider, which is most far from the guide rail, to the center of the screw hole is taken as T1, and $W1 > T1$ is satisfied.

7. The linear motion guide device according to any one of claims 4 to 6, wherein when viewing from the axial direction of the guide rail, a distance from an end on the guide rail side of the rolling element return hole to the center of the screw hole is taken as W2, a minimum distance from an inner side surface of the slider, which is most far from the guide rail, to the center of the screw hole is taken as T1, and $W2 = T1$ is satisfied.

8. The linear motion guide device according to any one of claims 1 to 7, wherein the seal member further includes a body-side lip portion (31e) that protrudes toward the fixing surface of the slider and that extends along a moving direction of the slider.

9. The linear motion guide device according to claim 8, wherein the slider includes:

a slider body (2A) that has the slider-side track surface; and
a slider end surface component that is attached to an end portion in the moving direction of the slider body, and
the body side lip portion abuts on both a lower surface of the slider body and a lower surface of the slider end surface component.

10. The linear motion guide device according to claim 8 or 9, wherein
the body side lip portion are disposed symmetrically with respect to a center of the fitting hole with the fitting hole interposed therebetween in a direction orthogonal to an extending direction of the body side lip portion.

11. The linear motion guide device according to claim 10, wherein
the body side lip portions are disposed at two or more positions of the seal member.

**12.** The linear motion guide device according to claim 10 or 11, wherein

the under seal has, at both end portions of the seal member in the extending direction, a pair of end lip portions (31f)
that extend in a direction orthogonal to the extending direction, and
each of the pair of end lip portions is connected to an end portion of the body side lip portion in the extending direction.

**13.** The linear motion guide device according to any one of claims 1 to 12, wherein an auxiliary lip (31h) protruding outward is further formed on a surface of the lip portion in contact with the guide rail, the auxiliary lip is formed between a section from the main lip to a connection portion connected to the seal member body.

**14.** The linear motion guide device according to claim 13, wherein
a shape of a cross section of the auxiliary lip, which is orthogonal to the longitudinal direction, is a circular arc shape.

**15.** The linear motion guide device according to claim 14, wherein
a circular arc radius of the auxiliary lip is 1 to 5 times of a protrusion height of the auxiliary lip from a surface of the lip portion.

**16.** The linear motion guide device according to any one of claims 13 to 15, wherein

the seal member body is a plate-like member,
the lip portion extends from one end of the seal member body in a plate thickness direction, and
a width of the lip portion in the plate thickness direction is smaller than a plate thickness of the seal member body.

**17.** The linear motion guide device according to any one of claims 13 to 16, wherein
a gap is formed between the opening and the fastening member at least in a direction orthogonal to an axis of the guide rail. [A1]

**18.** A linear motion guide device, comprising: a guide rail (1) that has a guide rail-side track surface (10) extending in an axial direction thereof; a slider (2) that is mounted so as to straddle the guide rail, has a slider-side track surface (11) facing the guide rail-side track surface (10), and is disposed so as to move relative to the guide rail in the axial direction; a plurality of rolling elements (3) that are rotatably disposed in a rolling element rolling path (13) formed between the guide rail-side track surface and the slider-side track surface; and
an under seal (30, 130, 230, 330, 430, 630) that is attached to the slider (2) to seal a gap formed between a side surface of the guide rail and an inner side surface of the slider, wherein the under seal includes: a seal member (31, 131, 231, 331, 531, 631) that includes a seal member body (31a, 731a,831a) and a lip portion (31b, 731b, 831b), wherein the seal member body extends in a longitudinal direction of the slider, and wherein the lip portion (31b, 731b, 831b) is formed at a tip in a direction of extending from the seal member body toward the guide rail and has a main lip (31g) in contact with the guide rail; and a seal cover that holds the seal member, and an auxiliary lip (31h) protruding outward is further formed on a surface of the lip portion in contact with the guide rail, the auxiliary lip (31h) is formed between a section from the main lip to a connection portion (31i) connected to the seal member body.

**19.** The linear motion guide device according to claim 18, wherein
a shape of a cross section of the auxiliary lip, which is orthogonal to the longitudinal direction, is a circular arc shape.

**20.** The linear motion guide device according to claim 19, wherein
a circular arc radius of the auxiliary lip is 1 to 5 times of a protrusion height of the auxiliary lip from a surface of the lip portion.

**21.** The linear motion guide device according to any one of claims 18 to 20, wherein

the seal member body is a plate-like member,
the lip portion extends from one end of the seal member body in a plate thickness direction, and
a width of the lip portion in the plate thickness direction is smaller than a plate thickness of the seal member body.

**Patentansprüche**

1. Linearbewegungs-Führungsvorrichtung, die umfasst:

   eine Führungsschiene (1), die eine führungsschienenseitige Laufbahnfläche (10) aufweist, die sich in einer axialen Richtung derselben erstreckt;
   einen Läufer (2), der so montiert ist, dass er die Führungsschiene überspannt, eine läuferseitige Laufbahnfläche (11) aufweist, die der führungsschienenseitigen Laufbahnfläche (10) zugewandt ist, und so angeordnet ist, dass er sich relativ zu der Führungsschiene in der axialen Richtung bewegt;
   eine Vielzahl von Wälzkörpern (3), die drehbar auf einem Wälzkörper-Rollweg (13) angeordnet sind, der zwischen der führungsschienenseitigen Laufbahnfläche und der läuferseitigen Laufbahnfläche ausgebildet ist; sowie
   eine Unterdichtung (30, 130, 230, 330, 430, 630), die an dem Läufer (2) angebracht ist, um einen Spalt abzudichten, der zwischen einer Seitenfläche der Führungsschiene und einer inneren Seitenfläche des Läufers ausgebildet ist, wobei die Unterdichtung enthält:

   ein Dichtungselement (31, 131, 231, 331, 531, 631), das einen Dichtungselement-Körper (31a, 731a, 831a), einen Lippenabschnitt (31b, 731b, 831b) sowie ein Passloch (31c) enthält, wobei sich der Dichtungselement-Körper in einer Längsrichtung des Läufers erstreckt, der Lippenabschnitt an einem vorderen Ende in einer Richtung der Erstreckung von dem Dichtungselement-Körper zu der Führungsschiene hin ausgebildet ist und eine Hauptlippe, die in Kontakt mit der Führungsschiene ist, und das Pass-Loch durch den Dichtungselement-Körper hindurch verläuft; sowie
   eine Dichtungsabdeckung (32, 132, 232, 332, 432, 532, 632, 832, 932) aufweist, die einen Pass-Vorsprung (32d) enthält, in dem eine Öffnung ausgebildet ist, und die das Dichtungselement hält, und der Pass-Vorsprung in das Pass-Loch (31c) eingepasst ist, und wenn sich der Pass-Vorsprung in einem Zustand befindet, in dem er an einer Befestigungsfläche des Läufers anliegt, die Unterdichtung an dem Läufer angebracht ist, wenn ein Befestigungselement (33), das sich durch die Öffnung hindurch erstreckt, an dem Läufer befestigt ist.

2. Linearbewegungs-Führungsvorrichtung nach Anspruch 1, wobei der Pass-Vorsprung (32d) eine äußere konische Fläche aufweist,

   das Pass-Loch (31c) eine innere konische Fläche aufweist, und
   der Pass-Vorsprung in das Pass-Loch eingepasst wird, indem die äußere konische Fläche in Kontakt mit der inneren konischen Fläche gebracht wird.

3. Linearbewegungs-Führungsvorrichtung nach Anspruch 1 oder 2, wobei die Dichtungsabdeckung (32) enthält:

   einen Bodenwandabschnitt (32a), der eine Unterseite des Dichtungselement-Körpers trägt;
   einen Seitenwandabschnitt (32b), der von dem Bodenwandabschnitt aus gebogen ist und eine äußere Seitenfläche des Dichtungselement-Körpers abdeckt; sowie
   ein Paar Stirnwandabschnitte (32c), die von dem Bodenwandabschnitt aus gebogen sind und beide Stirnflächen des Dichtungselement-Körpers abdecken.

4. Linearbewegungs-Führungsvorrichtung nach einem der Ansprüche 1 bis 3, wobei der Läufer (2) versehen ist mit:

   einem Wälzkörper-Rückführungsloch (16), zu dem die Vielzahl von Wälzkörpern zwischen der führungsschienenseitigen Laufbahnfläche und der läuferseitigen Laufbahnfläche zurückgeführt werden; sowie
   einem Schraubenloch, in das das Befestigungselement geschraubt wird, wobei, in der axialen Richtung der Führungsschiene gesehen, eine Mitte des Schraubenlochs näher an der Führungsschiene liegt als an einer Mitte des Wälzkörper-Rückführungslochs, und ein Abstand von der Mitte des Schraubenlochs zu einer von der Führungsschiene entfernten äußeren Seitenfläche in der Unterdichtung als W3 angenommen wird, und ein Abstand von der Mitte des Schraubenlochs zu der Mitte des Wälzkörper-Rückführungslochs als W4 angenommen wird , und W3 > W4 gilt.

5. Linearbewegungs-Führungsvorrichtung nach Anspruch 4, wobei
   ein Abstand von einer Fläche des Läufers, die an einer Seite der Führungsschiene liegt und die Befestigungsfläche des Läufers schneidet, in der axialen Richtung der Führungsschiene gesehen, zu der Mitte des Schraubenlochs als W1 angenommen wird, ein Abstand von einem nächstgelegenen Abschnitt an der Seite der Führungsschiene des Wälzkörper-Rückführungslochs zu der Mitte des Schraubenlochs als W2 angenommen wird, und W1 > W2 gilt.

6. Linearbewegungs-Führungsvorrichtung nach Anspruch 4 oder 5, wobei
ein Abstand von der Fläche des Läufers, die an der Seite der Führungsschiene liegt und die Befestigungsfläche des Läufers schneidet, in der axialen Richtung der Führungsschiene gesehen, zu der Mitte des Schraubenlochs als W1 angenommen wird, ein minimaler Abstand von einer Innenseitenfläche des Läufers, die am weitesten von der Führungsschiene entfernt ist, zu der Mitte des Schraubenlochs als T1 angenommen wird, und W1 > T1 gilt.

7. Linearbewegungs-Führungsvorrichtung nach einem der Ansprüche 4 bis 6, wobei ein Abstand von einem Ende an der Seite der Führungsschiene des Wälzkörper-Rückführungslochs, in der axialen Richtung der Führungsschiene gesehen, zu der Mitte des Schraubenlochs als W2 angenommen wird, ein minimaler Abstand von einer Innenseitenfläche des Läufers, die am weitesten von der Führungsschiene entfernt ist, zu der Mitte des Schraubenlochs als T1 angenommen wird, und W2 = T1 gilt.

8. Linearbewegungs-Führungsvorrichtung nach einem der Ansprüche 1 bis 7, wobei das Dichtungselement des Weiteren einen körperseitigen Lippenabschnitt (31e) enthält, der in Richtung der Befestigungsfläche des Läufers vorsteht und sich entlang der Bewegungsrichtung des Läufers erstreckt.

9. Linearbewegungs-Führungsvorrichtung nach Anspruch 8, wobei der Läufer enthält:

einen Läufer-Körper (2A), der die läuferseitige Laufbahnfläche aufweist; sowie
eine Läufer-Endflächenkomponente, die an einem Endabschnitt in der Bewegungsrichtung des Läufer-Körpers angebracht ist, und
der körperseitige Lippenabschnitt sowohl an einer Unterseite des Läufer-Körpers als auch an einer Unterseite der Läufer-Endflächenkomponente anliegt.

10. Linearbewegungs-Führungsvorrichtung nach Anspruch 8 oder 9, wobei
die körperseitigen Lippenabschnitte symmetrisch in Bezug auf eine Mitte des Passlochs angeordnet sind und das Passloch in einer Richtung orthogonal zu einer Richtung, in der sich der körperseitige Lippenabschnitt erstreckt, dazwischen angeordnet ist.

11. Linearbewegungs-Führungsvorrichtung nach Anspruch 10, wobei
die körperseitigen Lippenabschnitte an zwei oder mehr Positionen des Dichtungselementes angeordnet sind.

12. Linearbewegungs-Führungsvorrichtung nach Anspruch 10 oder 11, wobei

die Unterdichtung an beiden Endabschnitten des Dichtungselementes in der Erstreckungsrichtung ein Paar von End-Lippenabschnitten (31f) aufweist, die sich in einer Richtung orthogonal zu der Erstreckungsrichtung erstrecken, und
jeder der paarigen End-Lippenabschnitte mit einem Endabschnitt des körperseitigen Lippenabschnitts in der Erstreckungsrichtung verbunden ist.

13. Linearbewegungs-Führungsvorrichtung nach einem der Ansprüche 1 bis 12, wobei
eine Hilfslippe (31h), die nach außen vorsteht, des Weiteren an einer Fläche des Lippenabschnitts ausgebildet ist, die in Kontakt mit der Führungsschiene ist, und die Hilfslippe in einem Teilabschnitt von der Hauptlippe bis zu einem mit dem Dichtungselement-Körper verbundenen Verbindungsabschnitt ausgebildet ist.

14. Linearbewegungs-Führungsvorrichtung nach Anspruch 13, wobei
ein Querschnitt der Hilfslippe, der orthogonal zu der Längsrichtung ist, die Form eines Kreisbogens hat.

15. Linearbewegungs-Führungsvorrichtung nach Anspruch 14, wobei
ein Kreisbogen-Radius der Hilfslippe das 1- bis 5-fache einer Höhe beträgt, um die die Hilfslippe von einer Oberfläche des Lippenabschnitts vorsteht.

16. Linearbewegungs-Führungsvorrichtung nach einem der Ansprüche 13 bis 15, wobei

der Dichtungselement-Körper ein plattenförmiges Element ist,

der Lippenabschnitt sich von einem Ende des Dichtungselement-Körpers in einer Platten-Dickenrichtung erstreckt, und

eine Breite des Lippenabschnitts in der Platten-Dickenrichtung kleiner ist als eine Plattendicke des Dichtungselement-Körpers.

**17.** Linearbewegungs-Führungsvorrichtung nach einem der Ansprüche 13 bis 16, wobei
ein Spalt zwischen der Öffnung und dem Befestigungselement wenigstens in einer Richtung orthogonal zu einer Achse der Führungsschiene ausgebildet ist.

**18.** Linearbewegungs-Führungsvorrichtung, die umfasst:

eine Führungsschiene (1), die eine führungsschienenseitige Laufbahnfläche (10) aufweist, die sich in einer axialen Richtung derselben erstreckt;
einen Läufer (2), der so montiert ist, dass er die Führungsschiene überspannt, eine läuferseitige Laufbahnfläche (11) aufweist, die der führungsschienenseitigen Laufbahnfläche (10) zugewandt ist, und so angeordnet ist, dass er sich relativ zu der Führungsschiene in der axialen Richtung bewegt;
eine Vielzahl von Wälzkörpern (3), die drehbar auf einem Wälzkörper-Rollweg (13) angeordnet sind, der zwischen der führungsschienenseitigen Laufbahnfläche und der läuferseitigen Laufbahnfläche ausgebildet ist; sowie
eine Unterdichtung (30, 130, 230, 330, 430, 630), die an dem Läufer (2) angebracht ist, um einen Spalt abzudichten, der zwischen einer Seitenfläche der Führungsschiene und einer inneren Seitenfläche des Läufers ausgebildet ist, wobei die Unterdichtung enthält:

ein Dichtungselement (31, 131, 231, 331, 531, 631), das einen Dichtungselement-Körper (31a, 731a, 831a), sowie einen Lippenabschnitt (31b, 731b, 831b) enthält, wobei sich der Dichtungselement-Körper in einer Längsrichtung des Läufers erstreckt, der Lippenabschnitt (31b, 731b, 831b) an einem vorderen Ende in einer Richtung der Erstreckung von dem Dichtungselement-Körper zu der Führungsschiene hin ausgebildet ist und eine Hauptlippe (31g), die in Kontakt mit der Führungsschiene ist, sowie
eine Dichtungsabdeckung aufweist, die das Dichtungselement hält, und eine Hilfslippe (31h), die nach außen vorsteht, des Weiteren an einer Fläche des Lippenabschnitts ausgebildet ist, die in Kontakt mit der Führungsschiene ist, wobei die Hilfslippe (31h) in einem Teilabschnitt von der Hauptlippe bis zu einem mit dem Dichtungselement-Körper verbundenen Verbindungsabschnitt ausgebildet ist.

**19.** Linearbewegungs-Führungsvorrichtung nach Anspruch 18, wobei
ein Querschnitt der Hilfslippe, der orthogonal zu der Längsrichtung ist, die Form eines Kreisbogens hat.

**20.** Linearbewegungs-Führungsvorrichtung nach Anspruch 19, wobei
ein Kreisbogen-Radius der Hilfslippe das 1- bis 5-fache einer Höhe beträgt, um die die Hilfslippe von einer Oberfläche des Lippenabschnitts vorsteht.

**21.** Linearbewegungs-Führungsvorrichtung nach einem der Ansprüche 18 bis 20, wobei der Dichtungselement-Körper ein plattenartiges Element ist,

der Lippenabschnitt sich von einem Ende des Dichtungselement-Körpers in einer Platten-Dickenrichtung erstreckt, und
eine Breite des Lippenabschnitts in der Platten-Dickenrichtung kleiner ist als eine Plattendicke des Dichtungselement-Körpers.

## Revendications

**1.** Dispositif de guidage de déplacement linéaire, comprenant : un rail de guidage (1) qui comporte une surface de piste côté rail de guidage (10) s'étendant dans sa direction axiale ; une glissière (2) qui est montée de manière à chevaucher le rail de guidage, qui comporte une surface de piste côté glissière (11) faisant face à la surface de piste côté rail de guidage (10), et qui est disposée de manière à se déplacer par rapport au rail de guidage dans la direction axiale ; une pluralité d'éléments de roulement (3) qui sont disposés de manière rotative dans un chemin de roulement d'éléments de roulement (13) formé entre la surface de piste côté rail de guidage et la surface de piste côté glissière ; et un joint inférieur (30, 130, 230, 330, 430, 630) qui est attaché à la glissière (2) pour sceller un intervalle formé entre une surface latérale du rail de guidage et une surface latérale interne de la glissière, dans lequel le joint inférieur comprend : un élément de joint (31, 131, 231, 331, 531, 631) qui comprend un corps d'élément de joint (31a, 731a, 831a), une portion de lèvre (31b, 731b, 831b) et un trou de montage (31c), dans lequel le corps d'élément de joint s'étend en direction longitudinale de la glissière, dans lequel la portion de lèvre est formée sur une pointe dans une direction qui s'étend depuis le corps d'élément de joint vers le rail de guidage et comporte une lèvre principale en contact avec le rail de guidage, et dans lequel le trou de montage pénètre dans le corps d'élément de joint ; et un couvre-joint (32, 132, 232, 332, 432, 532, 632, 832, 932) qui comprend une protubérance de montage (32d) dans laquelle est formée une ouverture et qui maintient l'élément de joint, et la protubérance de montage est montée dans le trou de montage (31c), et avec la protubérance de montage dans un état de butée contre une surface de fixation de la glissière, le joint inférieur est attaché à la glissière lorsqu'un élément de fixation (33) qui pénètre dans l'ouverture est fixé à la glissière.

2. Dispositif de guidage de déplacement linéaire selon la revendication 1, dans lequel

   la protubérance de montage (32d) présente une surface conique externe,
   le trou de montage (31c) présente une surface conique interne, et
   la protubérance de montage est montée dans le trou de montage en amenant la surface conique externe en contact avec la surface conique interne.

3. Dispositif de guidage de déplacement linéaire selon la revendication 1 ou 2, dans lequel le couvre-joint (32) comprend : une portion de paroi de fond (32a) qui supporte une surface inférieure du corps d'élément de joint ; une portion de paroi latérale (32b) qui est pliée depuis la portion de paroi de fond et recouvre une surface latérale externe du corps d'élément de joint ; et une paire de portions de paroi d'extrémité (32c) qui sont pliées depuis la portion de paroi de fond et recouvrent les deux surfaces d'extrémité du corps d'élément de joint.

4. Dispositif de guidage de déplacement linéaire selon l'une quelconque des revendications 1 à 3, dans lequel la glissière (2) est formée avec :

   un trou de retour d'éléments de roulement (16) auquel sont renvoyés les éléments de la pluralité d'éléments de roulement qui roulent entre la surface de piste côté rail de guidage et la surface de piste côté glissière ; et un trou de vis dans lequel est vissé l'élément de fixation,
   lors de la visualisation du rail de guidage en direction axiale, le centre du trou de vis est plus proche du rail de guidage que le centre du trou de retour d'éléments de roulement, et la distance depuis le centre du trou de vis et une surface latérale externe éloignée du rail de guidage dans le joint inférieur est désignée par W3, la distance depuis le centre du trou de vis jusqu'au centre du trou de retour d'éléments de roulement est désignée par W4, et la relation W3 ≥ W4 est satisfaite.

5. Dispositif de guidage de déplacement linéaire selon la revendication 4, dans lequel
   lors de la visualisation du rail de guidage en direction axiale, la distance depuis une surface de la glissière qui se trouve sur un côté rail de guidage et intersecte la surface de fixation de la glissière jusqu'au centre du trou de vis est désignée par W1, la distance depuis la portion la plus proche du côté rail de guidage du trou de retour d'éléments de roulement jusqu'au centre du trou de vis est désignée par W2, et la relation W1 ≥ W2 est satisfaite.

6. Dispositif de guidage de déplacement linéaire selon la revendication 4 ou 5, dans lequel
   lors de la visualisation du rail de guidage en direction axiale, la distance depuis la surface de la glissière qui se trouve du côté rail de guidage et intersecte la surface de fixation de la glissière jusqu'au centre du trou de vis est désignée par W1, la distance minimale depuis une surface latérale interne de la glissière qui est la plus éloignée du rail de guidage jusqu'au centre du trou de vis est désignée par T1, et la relation W1 > T1 est satisfaite.

7. Dispositif de guidage de déplacement linéaire selon l'une quelconque des revendications 4 à 6, dans lequel, lors de la visualisation du rail de guidage en direction axiale, la distance depuis une extrémité du côté rail de guidage du trou de retour d'éléments de roulement jusqu'au centre du trou de vis est désignée par W2, la distance minimale depuis une surface latérale interne de la glissière qui est la plus éloignée du rail de guidage jusqu'au centre du trou de vis est désignée par T1, et la relation W2 = T1 est satisfaite.

8. Dispositif de guidage de déplacement linéaire selon l'une quelconque des revendications 1 à 7, dans lequel l'élément de joint comprend en outre une portion de lèvre côté corps (31e) qui ressort vers la surface de fixation de la glissière et qui s'étend selon une direction de déplacement de la glissière.

**9.** Dispositif de guidage de déplacement linéaire selon la revendication 8, dans lequel la glissière comprend :

un corps de glissière (2A) qui comporte la surface de piste côté glissière ; et
un composant de surface d'extrémité de glissière qui est attaché à une portion d'extrémité en direction de déplacement du corps de glissière, et
la portion de lèvre côté corps vient à butée contre une surface inférieure du corps de glissière ainsi qu'une surface inférieure du composant de surface d'extrémité de glissière.

**10.** Dispositif de guidage de déplacement linéaire selon la revendication 8 ou 9, dans lequel les portions de lèvre côté corps sont disposées symétriquement par rapport au centre du trou de montage, avec le trou de montage interposé dans une direction orthogonale à une direction d'extension de la portion de lèvre côté corps.

**11.** Dispositif de guidage de déplacement linéaire selon la revendication 10, dans lequel les portions de lèvre côté corps sont disposées à deux ou plusieurs positions de l'élément de joint.

**12.** Dispositif de guidage de déplacement linéaire selon la revendication 10 ou 11, dans lequel

le joint inférieur comporte, aux deux portions d'extrémité de l'élément de joint dans la direction orthogonale, une paire de portions de lèvre d'extrémité (31f) qui s'étendent dans une direction orthogonale à la direction d'extension, et
chaque portion de la paire de portions de lèvre d'extrémité est connectée à une portion d'extrémité de la portion de lèvre côté corps dans la direction d'extension.

**13.** Dispositif de guidage de déplacement linéaire selon l'une quelconque des revendications 1 à 12, dans lequel une lèvre auxiliaire (31h) qui ressort vers l'extérieur est formée en outre sur une surface de la portion de lèvre en contact avec le rail de guidage, et la lèvre auxiliaire est formée entre une section de la lèvre principale et une portion de connexion connectée au corps d'élément de joint.

**14.** Dispositif de guidage de déplacement linéaire selon la revendication 13, dans lequel la forme d'une section transversale de la lèvre auxiliaire qui est orthogonale à la direction longitudinale est une forme d'arc circulaire.

**15.** Dispositif de guidage de déplacement linéaire selon la revendication 14, dans lequel le rayon de l'arc circulaire de la lèvre auxiliaire est de 1 à 5 fois la hauteur de protubérance de la lèvre auxiliaire depuis une surface de la portion de lèvre.

**16.** Dispositif de guidage de déplacement linéaire selon l'une quelconque des revendications 13 à 15, dans lequel

le corps d'élément de joint est un élément en forme de plaque,
la portion de lèvre s'étend depuis une extrémité du corps d'élément de joint en direction de l'épaisseur de la plaque, et
la largeur de la portion de lèvre en direction de l'épaisseur de la plaque est inférieure à l'épaisseur de plaque du corps d'élément de joint.

**17.** Dispositif de guidage de déplacement linéaire selon l'une quelconque des revendications 13 à 16, dans lequel un intervalle est formé entre l'ouverture et l'élément de fixation au moins dans une direction orthogonale à l'axe du rail de guidage.

**18.** Dispositif de guidage de déplacement linéaire, comprenant : un rail de guidage (1) qui comporte une surface de piste côté rail de guidage (10) qui s'étend dans sa direction axiale ; une glissière (2) qui est montée de manière à chevaucher le rail de guidage, comportant une surface de piste côté glissière (11) qui fait face à la surface de piste côté rail de guidage (10), et qui est disposée de manière à se déplacer par rapport au rail de guidage dans la direction axiale ; une pluralité d'éléments de roulement (3) qui sont disposés de manière rotative dans un chemin de roulement d'éléments de roulement (13) formé entre la surface de piste côté rail de guidage et la surface de piste côté glissière ; et un joint inférieur (30, 130, 230, 330, 430, 630) qui est attaché à la glissière (2) pour sceller un intervalle formé entre une surface latérale du rail de guidage et une surface latérale interne de la glissière, dans lequel le joint inférieur comprend : un élément de joint (31, 131, 231, 331, 531, 631) qui comprend un corps d'élément de joint (31a, 731a, 831a) et une portion de lèvre (31b, 731b, 831b), dans lequel le corps d'élément de joint s'étend en direction longitudinale de la glissière, et dans lequel la portion de lèvre (31b, 731b, 831b) est formée à une pointe en direction d'extension depuis le corps d'élément de joint vers le rail de guidage et comporte une lèvre principale (31g) en contact avec le rail de guidage ; et un couvre-joint qui maintient l'élément de joint, et une lèvre auxiliaire (31h) qui ressort vers l'extérieur est formée en outre sur une surface de la portion de lèvre en contact avec le rail de guidage, la lèvre auxiliaire (31h) étant formée entre une section de la lèvre principale à une portion de connexion (31i) connectée au corps d'élément de joint.

19. Dispositif de guidage de déplacement linéaire selon la revendication 18, dans lequel
la forme d'une section transversale de la lèvre auxiliaire qui est orthogonale à la direction longitudinale est une forme d'arc circulaire.

20. Dispositif de guidage de déplacement linéaire selon la revendication 19, dans lequel
le rayon de l'arc circulaire de la lèvre auxiliaire est de 1 à 5 fois la hauteur de protubérance de la lèvre auxiliaire depuis une surface de la portion de lèvre.

21. Dispositif de guidage de déplacement linéaire selon l'une quelconque des revendications 18 à 20, dans lequel

le corps d'élément de joint est un élément en forme de plaque,
la portion de lèvre s'étend depuis une extrémité du corps d'élément de joint en direction de l'épaisseur de la plaque, et
la largeur de la portion de lèvre en direction de l'épaisseur de la plaque est inférieure à l'épaisseur de plaque du corps d'élément de joint.

*FIG. 1*

FIG. 2

FIG. 3

# FIG. 4

EP 3 722 630 B1

FIG. 5A

31e    31c    31c    V    31c    31a

31b

FIG. 5B

31e

31c    31c    31c

FIG. 5C

31b    31e    31a

31

31g    31c

EP 3 722 630 B1

*FIG. 6A*

*FIG. 6B*

*FIG. 6C*

*FIG. 7A*

*FIG. 7B*

*FIG. 8*

*FIG. 9*

*FIG. 10*

*FIG. 11*

EP 3 722 630 B1

*FIG. 12A*

131

31c

31a

31e

31e

31c

XII

XII

*FIG. 12B*

31e

31e

131

31b

31a

31g

31c(31d)

FIG. 13

EP 3 722 630 B1

*FIG. 14*

FIG. 15

*FIG. 16A*

331

31c

31c

XVI          XVI

31e          31e

31a

*FIG. 16B*

31e     31e     331

31b     31a

31g     31c(31d)

*FIG. 17A*

*FIG. 17B*

EP 3 722 630 B1

*FIG. 18A*

31c   31c   XVIII   31c   31a   531

*FIG. 18B*

31c   31c   31c   531

31a

*FIG. 18C*

31a
31c   31e   531
31b
31g   31d1

FIG. 19A

FIG. 19B

FIG. 19C

EP 3 722 630 B1

EP 3 722 630 B1

## FIG. 20A

## FIG. 20B

## FIG. 21A

## FIG. 21B

42

## FIG. 22A

## FIG. 22B

2A

42

46

40A   43   45   44

43   45   44

## FIG. 23A

32e          32e

φ2

832          32d          32d

## FIG. 23B

32e          32e

932          32d          32d

# FIG. 24

*FIG. 25*

FIG. 26

FIG. 27

FIG. 28A

631

31h

31g

1

31b

31i

31a

FIG. 28B

631

31h

31g

1

31b

31i

31a

FIG. 29

FIG. 30

EP 3 722 630 B1

## FIG. 31

*FIG. 32*

20a,20b

731a

31i

31h

31g

731b

*FIG. 33A*

*FIG. 33B*

*FIG. 34A*

*FIG. 34B*

*FIG. 34C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016152123 A
- JP 2005114034 A
- JP S6377622 A
- JP 2014219025 A
- JP 2005291341 A
- JP H712626 A
- JP 2010084811 A
- JP 11287245 A
- JP 2002266858 A
- JP 2014163482 A
- JP 2017234350 A
- JP 2017234351 A
- JP 2018218340 A